# EUROPEAN PATENT APPLICATION

(11) **EP 4 418 227 A1**
(43) Date of publication of application: **21.08.2024**
(21) Application number: 23830162.6
(22) Date of filing: 26.06.2023
(51) Int. Cl.: G08B 21/02, B60Q 9/00

(54) **RIDING SERVICE CARD RECOMMENDATION METHOD AND RELATED APPARATUS**

(30) Priority: 28.06.2022 CN 202210742108
(71) Applicant: Huawei Technologies Co., Ltd., Shenzhen, Guangdong 518129 (CN)
(72) Inventor: YANG, Hao, Shenzhen, Guangdong 518129 (CN); ZHUO, Xiaoyan, Shenzhen, Guangdong 518129 (CN); ZOU, Zhiguo, Shenzhen, Guangdong 518129 (CN); LIU, Chang, Shenzhen, Guangdong 518129 (CN)
(74) Representative: Goddar, Heinz J.
(86) International application number: PCT/CN2023/102296
(87) International publication number: WO 2024/001984

(57) **Abstract**

A riding service card recommendation method and a related apparatus are provided. A vehicle (100) obtains vehicle status information of the vehicle (100) and/or information about a passenger in the vehicle (100); when determining that the vehicle status information of the vehicle (100) and/or the information about the passenger in the vehicle (100) meet/meets a first condition, the vehicle (100) displays a first recommended card by using a first electronic device, where the first recommended card is used to prompt a user to immediately take a child away from the vehicle (100); and after the vehicle (100) displays the first recommended card, when determining that the vehicle status information of the vehicle (100) and/or the information about the passenger in the vehicle (100) meet/meets a second condition, the vehicle (100) displays a second recommended card by using the first electronic device, where the second recommended card is used to inform a user that a child is left in the vehicle (100) for a long time. According to the method, the vehicle (100) may monitor a "child-left-unattended" event, and display different recommended cards based on different duration for which a child is left in the vehicle, thereby preventing the child from being in danger when being left in the vehicle for a long time.

## Description

This application claims priority to Chinese Patent Application No. 202210742108.2, filed with the China National Intellectual Property Administration on June 28, 2022 and entitled "RIDING SERVICE CARD RECOMMENDATION METHOD AND RELATED APPARATUS", which is incorporated herein by reference in its entirety.

### TECHNICAL FIELD

This application relates to the field of vehicle information display technologies, and in particular, to a riding service card recommendation method and a related apparatus.

### BACKGROUND

With continuous development of automobile technologies, vehicles are increasingly intelligent. During traveling of a vehicle, a driver may answer a call, receive an SMS message, and receive an instant chat message and other content by using an in-vehicle infotainment. Therefore, riding safety also receives increasingly more attention. For example, when a child rides in a vehicle, how to improve safety of riding in a vehicle by a child requires further research.

### SUMMARY

This application provides a riding service card recommendation method and a related apparatus, to detect events of "child riding in a vehicle", "child leaving a seat", and "child being left in a vehicle", and notify a user of the detected events, thereby improving safety of riding in a vehicle by a child.

According to a first aspect, this application provides a riding service card recommendation method, and the method includes: A vehicle obtains vehicle status information of the vehicle and/or information about a passenger in the vehicle; when determining that the vehicle status information of the vehicle and/or the information about the passenger in the vehicle meet/meets a first condition, the vehicle displays a first recommended card by using a first electronic device, where the first recommended card is used to prompt a user to immediately take a child away from the vehicle; and after the vehicle displays the first recommended card, when determining that the vehicle status information of the vehicle and/or the information about the passenger in the vehicle meet/meets a second condition, the vehicle displays a second recommended card by using the first electronic device, where the second recommended card is used to inform a user that a child is left in the vehicle for a long time.

According to the riding service card recommendation method provided in the first aspect, a "child-left-unattended" event may be monitored, and different recommended cards may be displayed based on different duration for which a child is left in the vehicle, thereby preventing the child from being in danger when being left in the vehicle for a long time.

With reference to the first aspect, in a possible implementation, when it is determined that the vehicle status information of the vehicle and/or the information about the passenger in the vehicle meet/meets the second condition, the method further includes: The vehicle sends a first instruction to the first electronic device, where the first instruction is used to instruct the first electronic device to output first alarm information, and the first alarm information is in one or more of the following manners: vibration, light blinking, and voice broadcast.

In a possible implementation, when the vehicle establishes a communication connection to the first electronic device, the vehicle sends the first instruction to the first electronic device, where the first instruction is used to instruct the first electronic device to output the first alarm information, and the first alarm information is in one or more of the following manners: vibration, light blinking, and voice broadcast.

In another possible implementation, when the vehicle establishes no communication connection to the first electronic device, the vehicle sends the first instruction to the first electronic device by using a server, where the first instruction is used to instruct the first electronic device to output the first alarm information, and the first alarm information is in one or more of the following manners: vibration, light blinking, and voice broadcast.

Optionally, the vehicle may not need to send the first instruction to the first electronic device, and the first electronic device outputs the first alarm information when the first electronic device receives no child-leaving-seat notification sent by the vehicle.

After the vehicle detects that a child leaves a seat, the vehicle sends a seat leaving notification to the first electronic device. After receiving the seat leaving notification, the first electronic device displays or outputs the first alarm information.

In this way, when it is determined that a child is left in the vehicle for a long time, the first electronic device may output alarm information, to inform that a child is left in the vehicle for a long time.

With reference to the first aspect, in a possible implementation, when it is determined that the vehicle status information of the vehicle and/or the information about the passenger in the vehicle meet/meets the second condition, the method further includes: The vehicle outputs second alarm information, where the second alarm information is in one or more of the following manners: vibration, light blinking, and voice broadcast. In this way, when the first electronic device outputs the alarm information, the vehicle may also output the alarm information.

With reference to the first aspect, in a possible implementation, the first condition includes: a driver leaves a driver's seat, and a child is in a first seat in the vehicle; or the second condition includes any one or more of the following: time for which a child is in the first seat exceeds first time, and a distance between the first electronic device and the vehicle exceeds a first distance threshold.

With reference to the first aspect, in a possible implementation, when the vehicle displays the first recommended card by using the first electronic device, the method further includes: displaying the first recommended card on the vehicle. In this way, when the first electronic device displays the first recommended card, the vehicle may also display the first recommended card.

With reference to the first aspect, in a possible implementation, when the vehicle displays the second recommended card by using the first electronic device, the method further includes: displaying the second recommended card on the vehicle. In this way, when the first electronic device displays the second recommended card, the vehicle may also display the second recommended card.

With reference to the first aspect, in a possible implementation, before the vehicle displays the first recommended card by using the first electronic device, the method further includes: The vehicle displays a third recommended card when determining that the vehicle status information of the vehicle and/or the information about the passenger in the vehicle meet/meets a third condition, where the third recommended card is used to inform a user that a child has taken a seat, the third recommended card includes one or more entertainment options, and the one or more entertainment options include but are not limited to a children's song playing option and an animation playing option. In this way, after detecting that a child takes a seat, the vehicle may display a recommended card for "child-sitting-down", to inform a user that the child has taken a seat.

With reference to the first aspect, in a possible implementation, when the vehicle displays the third recommended card, the method further includes: The vehicle displays the third recommended card by using a second electronic device.

The second electronic device may be the same as or different from the first electronic device. When the second electronic device is different from the first electronic device, the second electronic device may be an electronic device near the first seat, so that a child can select, on the second electronic device, the children's song playing option or the animation playing option on the third recommended card.

In this way, when the vehicle displays the third recommended card, the second electronic device may also display the third recommended card.

With reference to the first aspect, in a possible implementation, the third condition includes: a child in the vehicle is in the first seat, and the driver is in the driver's seat.

With reference to the first aspect, in a possible implementation, that a child in the vehicle is in the first seat specifically includes: an infrared sensor on the vehicle continuously detects, for the first time, that there is a person in the first seat, and pressure data collected by a pressure sensor on the first seat or gravity data collected by a gravity sensor is stably maintained at a first value, where the first value is equivalent to a weight of the child. In this way, accuracy of detecting, by the vehicle, whether there is a child in the first seat can be improved.

With reference to the first aspect, in a possible implementation, after the vehicle displays the third recommended card, the method further includes: When determining that the vehicle status information of the vehicle and/or the information about the passenger in the vehicle meet/meets a fourth condition, the vehicle stops displaying the third recommended card, or the vehicle displays a fourth recommended card by using the first electronic device, where the fourth recommended card is used to inform a user that a child has left a seat.

Optionally, after detecting that a child leaves a seat, the vehicle stops displaying the third recommended card, or the vehicle may display the fourth recommended card.

With reference to the first aspect, in a possible implementation, when the vehicle displays the fourth recommended card by using the first electronic device, the method further includes: The vehicle displays the fourth recommended card. In this way, when the first electronic device displays the fourth recommended card, the vehicle may also display the fourth recommended card.

With reference to the first aspect, in a possible implementation, the fourth condition includes: a child in the vehicle is not in the first seat.

With reference to the first aspect, in a possible implementation, a type of the first electronic device is any one of the following: a mobile phone, a smartwatch, and a Bluetooth headset.

According to a second aspect, this application provides a riding service card recommendation method, and the method includes: A first electronic device receives a first instruction or information about a first recommended card when a vehicle determines that vehicle status information of the vehicle and/or information about a passenger in the vehicle meet/meets a first condition; the first electronic device displays the first recommended card in response to the first instruction or the information about the first recommended card, where the first recommended card is used to prompt a user to immediately take a child away from the vehicle; after the first electronic device displays the first recommended card, the first electronic device receives a second instruction or information about a second recommended card when the vehicle determines that the vehicle status information of the vehicle and/or the information about the passenger in the vehicle meet/meets a second condition; and the first electronic device displays the second recommended card in response to the second instruction or the information about the second recommended card, where the second recommended card is used to inform a user that a child is left in the vehicle for a long time.

According to the riding service card recommendation method provided in the second aspect, a "child-left-unattended" event may be monitored, and different recommended cards may be displayed based on different duration for which a child is left in the vehicle, thereby preventing the child from being in danger when being left in the vehicle for a long time.

With reference to the second aspect, in a possible implementation, when the vehicle determines that the vehicle status information of the vehicle and/or the information about the passenger in the vehicle meet/meets the second condition, the method further includes: The first electronic device receives a third instruction, where the third instruction is used to instruct the first electronic device to output first alarm information, and the first alarm information is in one or more of the following manners: vibration, light blinking, and voice broadcast.

In a possible implementation, when the vehicle establishes a communication connection to the first electronic device, the first electronic device receives the third instruction sent by the vehicle, where the third instruction is used to instruct the first electronic device to output the first alarm information, and the first alarm information is in one or more of the following manners: vibration, light blinking, and voice broadcast.

In another possible implementation, when the vehicle establishes no communication connection to the first electronic device, the first electronic device receives, by using a server, the third instruction sent by the vehicle, where the third instruction is used to instruct the first electronic device to output the first alarm information, and the first alarm information is in one or more of the following manners: vibration, light blinking, and voice broadcast.

Optionally, the first electronic device may not need to receive the third instruction sent by the vehicle, and the first electronic device outputs the first alarm information when the first electronic device receives no child-leaving-seat notification sent by the vehicle.

After the vehicle detects that a child leaves a seat, the first electronic device may receive a seat leaving notification sent by the vehicle, and after receiving the seat leaving notification, the first electronic device displays or outputs the first alarm information.

In this way, when it is determined that a child is left in the vehicle for a long time, the first electronic device may output alarm information, to inform that a child is left in the vehicle for a long time.

With reference to the second aspect, in a possible implementation, when the first electronic device establishes a communication connection to the vehicle, the first electronic device receives the first instruction or the information about the first recommended card that is sent by the vehicle.

With reference to the second aspect, in a possible implementation, when the first electronic device establishes no communication connection to the vehicle, the first electronic device receives the first instruction or the information about the first recommended card that is sent by a server.

With reference to the second aspect, in a possible implementation, the first condition includes: a driver leaves a driver's seat, and a child is in a first seat in the vehicle; or the second condition includes any one or more of the following: time for which a child is in the first seat exceeds first time, and a distance between the first electronic device and the vehicle exceeds a first distance threshold.

With reference to the second aspect, in a possible implementation, before the first electronic device displays the first recommended card, the method further includes: The first electronic device displays a third recommended card when the vehicle determines that the vehicle status information of the vehicle and/or the information about the passenger in the vehicle meet/meets a third condition, where the third recommended card is used to inform a user that a child has taken a seat, the third recommended card includes one or more entertainment options, and the one or more entertainment options include but are not limited to a children's song playing option and an animation playing option. In this way, after detecting that a child takes a seat, the vehicle may display, by using the first electronic device, a recommended card for "child-sitting-down", to inform a user that the child has taken a seat.

With reference to the second aspect, in a possible implementation, the third condition includes: a child in the vehicle is in the first seat, and the driver is in the driver's seat.

With reference to the second aspect, in a possible implementation, that a child in the vehicle is in the first seat specifically includes: an infrared sensor on the vehicle continuously detects, for the first time, that there is a person in the first seat, and pressure data collected by a pressure sensor on the first seat or gravity data collected by a gravity sensor is stably maintained at a first value, where the first value is equivalent to a weight of the child. In this way, accuracy of detecting, by the vehicle, whether there is a child in the first seat can be improved.

With reference to the second aspect, in a possible implementation, after the first electronic device displays the third recommended card, the method further includes: When the vehicle determines that the vehicle status information of the vehicle and/or the information about the passenger in the vehicle meet/meets a fourth condition, the first electronic device stops displaying the third recommended card, or the first electronic device displays a fourth recommended card, where the fourth recommended card is used to inform a user that a child has left a seat. Optionally, after the vehicle detects that a child leaves a seat, the first electronic device stops displaying the third recommended card, or the first electronic device may not display the fourth recommended card.

With reference to the second aspect, in a possible implementation, the fourth condition includes: a child in the vehicle is not in the first seat.

With reference to the second aspect, in a possible implementation, a type of the first electronic device is any one of the following: a mobile phone, a smartwatch, and a Bluetooth headset.

According to a third aspect, this application provides a vehicle. The vehicle includes one or more processors, a display screen, and one or more memories. The display screen and the one or more memories are coupled to the one or more processors. The one or more memories are configured to store computer program code, and the computer program code includes computer instructions. The one or more processors invoke the computer instructions to enable the vehicle to perform the riding service card recommendation method provided in any possible implementation of any one of the foregoing aspects.

According to a fourth aspect, this application provides an electronic device, which is a first electronic device. The electronic device includes one or more processors, a display screen, and one or more memories. The display screen and the one or more memories are coupled to the one or more processors. The one or more memories are configured to store computer program code, and the computer program code includes computer instructions. The one or more processors invoke the computer instructions to enable the first electronic device to perform the riding service card recommendation method provided in any possible implementation of any one of the foregoing aspects.

According to a fifth aspect, this application provides a computer-readable storage medium. When computer instructions are run on a vehicle, the vehicle is enabled to perform the riding service card recommendation method provided in any possible implementation of any one of the foregoing aspects.

According to a sixth aspect, this application provides a computer-readable storage medium. When computer instructions are run on a first electronic device, the first electronic device is enabled to perform the riding service card recommendation method provided in any possible implementation of any one of the foregoing aspects.

According to a seventh aspect, this application provides a computer program product. When the computer program product is run on a vehicle, the vehicle is enabled to perform the riding service card recommendation method provided in any possible implementation of any one of the foregoing aspects.

According to an eighth aspect, this application provides a computer program product. When the computer program product is run on a first electronic device, the first electronic device is enabled to perform the riding service card recommendation method provided in any possible implementation of any one of the foregoing aspects.

For beneficial effects of the second aspect to the eighth aspect, refer to the descriptions of the beneficial effects in the first aspect. Details are not described herein again in embodiments of this application.

### BRIEF DESCRIPTION OF DRAWINGS

FIG. 1A is a diagram of an architecture of a system according to an embodiment of this application;
FIG. 1B is a diagram of an architecture of another system according to an embodiment of this application;
FIG. 2A is a diagram of a hardware structure of a vehicle 100 according to an embodiment of this application;
FIG. 2B is a diagram of a structure of a first electronic device according to an embodiment of this application;
FIG. 2C is a diagram in which a vehicle 100 generates a recommended card according to an embodiment of this application;
FIG. 3A to FIG. 3D are a group of diagrams in which a vehicle 100 receives an operation of a user to enable a child safety monitoring mode according to an embodiment of this application;
FIG. 4A and FIG. 4B are a group of diagrams in which a vehicle 100 displays instructions for use of a shortcut key according to an embodiment of this application;
FIG. 5 is a diagram in which a central display screen displays an icon of a child safety monitoring mode according to an embodiment of this application;
FIG. 6A-1 to FIG. 6B are a group of diagrams in which a vehicle 100 displays a recommended card corresponding to a "child-sitting-down" event according to an embodiment of this application;
FIG. 6C-1 to FIG. 6D-2 are diagrams in which a vehicle 100 displays a recommended card after determining a "child-left-unattended" event according to an embodiment of this application;
FIG. 6E-1 and FIG. 6E-2 are diagrams in which a recommended card is displayed after a vehicle 100 determines a "child-leaving-seat" event according to an embodiment of this application;

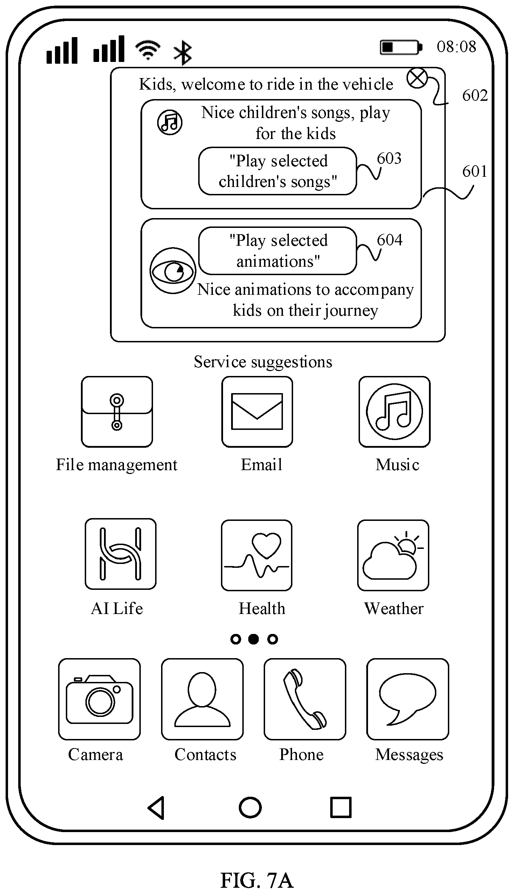

FIG. 7A to FIG. 7D are a group of diagrams in which a recommended card is displayed on a mobile phone according to an embodiment of this application;

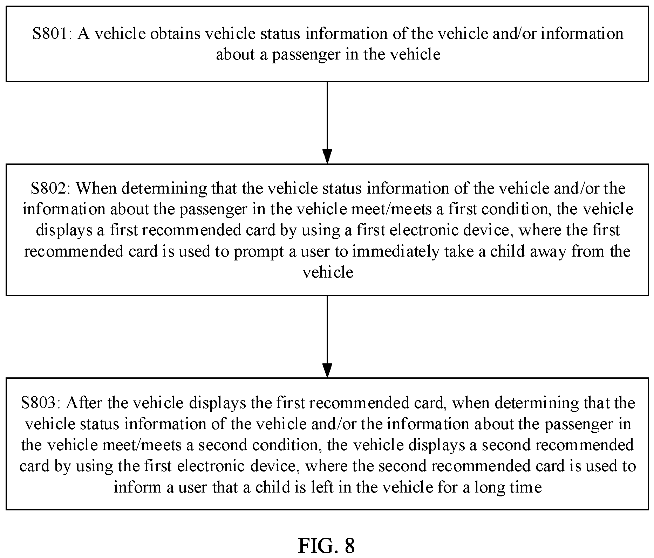

FIG. 8 is a schematic flowchart of a riding service card recommendation method according to an embodiment of this application; and

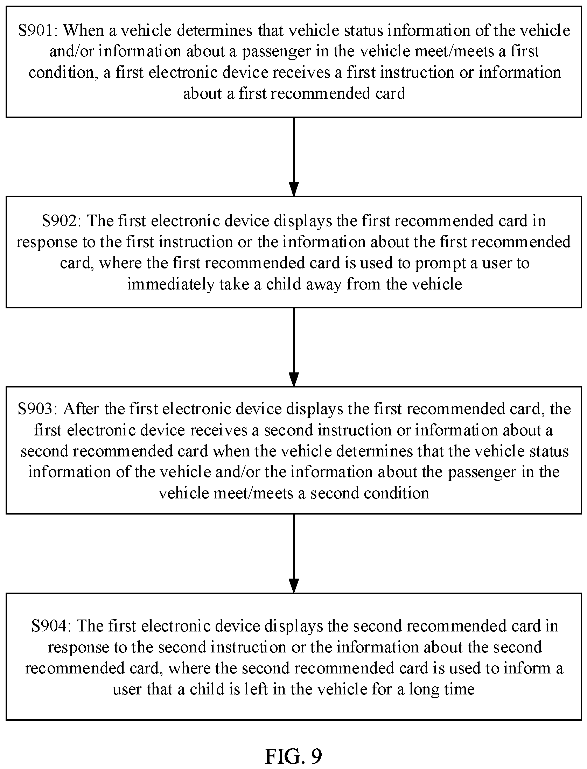

FIG. 9 is a schematic flowchart of another riding service card recommendation method according to an embodiment of this application.

### DESCRIPTION OF EMBODIMENTS

The following clearly describes in detail the technical solutions in embodiments of this application with reference to the accompanying drawings. In the descriptions of embodiments of this application, unless otherwise specified, "/" means "or". For example, "A/B" may indicate A or B. In this specification, "and/or" is merely an association relationship for describing associated objects, and indicates that three relationships may exist. For example, "A and/or B" may indicate the following three cases: Only A exists, both A and B exist, and only B exists. In addition, in the descriptions of embodiments of this application, "a plurality of' means two or more.

The following terms "first" and "second" are merely used for the purpose of description, and cannot be understood as an indicationor implication of relative importance or an implicit indication of a quantity of indicated technical features. Therefore, a feature limited by "first" or "second" may explicitly or implicitly include one or more features. In the descriptions of embodiments of this application, unless otherwise specified, "a plurality of' means two or more.

The term "user interface" (user interface, UI) in the following embodiments of this application is a media interface for interaction and information exchange between an application program or an operating system and a user, and implements conversion between an internal form of information and a form acceptable to the user. A commonly used representation form of the user interface is a graphical user interface (graphical user interface, GUI), which is a computer operation-related user interface displayed graphically. The user interface may be a visual interface element, such as a text, an icon, a button, a menu, a tab, a text box, a dialog box, a status bar, a navigation bar, or a Widget, that is displayed on a display screen of an electronic device.

This application provides a riding service recommendation method. The method includes the following steps.

Step 1: After detecting that a child rides in a vehicle 100, the vehicle 100 monitors vehicle status information and/or information about a passenger in the vehicle.

Optionally, when it is determined that the vehicle status information and/or the information about the passenger in the vehicle meet/meets a specific requirement, that is, after the vehicle 100 detects "child-sitting-down", the vehicle 100 may display, on the vehicle 100, a recommended card for "child riding in a vehicle". The recommended card is used to inform a user that a child is currently riding in the vehicle and please pay attention to safety of the child.

Optionally, the vehicle 100 may improve, based on a plurality of levels of detection mechanisms, accuracy of detecting whether there is a child in a first seat.

A first-level detection mechanism is that the vehicle 100 monitors, based on a microwave sensor and/or an infrared sensor in the vehicle, whether a person or an object is on the first seat. After determining that a person is in the seat, the vehicle 100 triggers a second-level detection mechanism.

Optionally, if the vehicle 100 continuously determines, for specific time based on microwave data or infrared data, that a person is in the first seat, the vehicle 100 starts the second-level detection mechanism.

The second-level detection mechanism is that the vehicle 100 determines, based on pressure data collected by a pressure sensor installed on the first seat or gravity data collected by a gravity sensor, that the person in the first seat is a child. In this case, the vehicle 100 may display a recommended card corresponding to a "child-sitting-down" event.

Step 2: When determining that the vehicle status information and/or the information about the passenger in the vehicle meets a first condition, the vehicle 100 detects that a driver is about to leave a driver's seat, and the vehicle 100 may display, on the vehicle 100, a recommended card for "child-left-unattended", where the recommended card is used to prompt a user to immediately take a child away from a seat.

Optionally, in specific time after the vehicle 100 displays the recommended card, if the vehicle 100 detects that the vehicle status information and/or the information about the passenger in the vehicle meet/meets a second condition, the vehicle 100 displays a recommended card on the vehicle 100. The recommended card is used to inform a user that a child is left in the vehicle for a long time.

Optionally, when the vehicle 100 detects that the vehicle status information and the information about the passenger in the vehicle meet the second condition, the vehicle 100 may trigger an alarm behavior; or the vehicle 100 sends a first instruction to a first electronic device, where the first instruction is used to instruct the first electronic device to output second alarm information.

Optionally, in some embodiments, when the vehicle 100 detects that the vehicle status information about the passenger in the vehicle meet a fourth condition, the vehicle 100 may display a recommended card corresponding to a "child-leaving-seat" event. The recommended card corresponding to the "child-leaving-seat" event is used to inform a user that a child in the current vehicle 100 has left a seat, and please confirm to avoid a case in which the child gets off the vehicle privately without knowing to the user.

Optionally, the recommended card may alternatively be displayed on another electronic device that establishes a connection relationship with the vehicle 100, for example, a mobile phone, a Bluetooth watch, or a Bluetooth headset.

In this embodiment of this application, events of "child riding in a vehicle", "child leaving a seat", and "child being left in a vehicle" are detected, and a user is notified of the detected events, thereby improving safety of riding in a vehicle by a child.

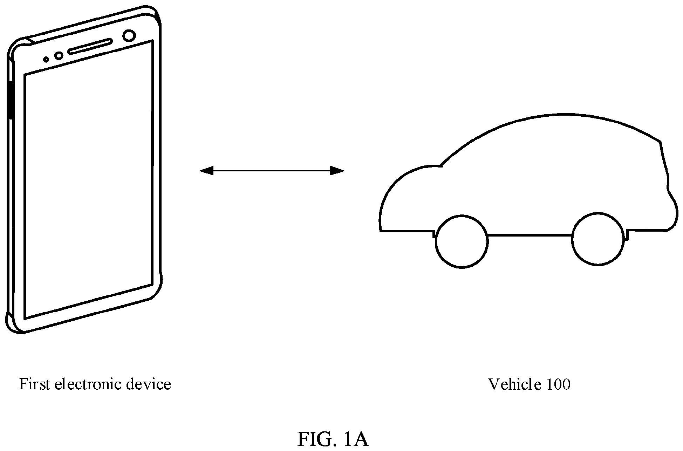

FIG. 1A is an example diagram of an architecture of a system according to an embodiment of this application.

The system includes a vehicle 100 and a first electronic device.

The vehicle 100 establishes a communication connection to the first electronic device. The communication connection includes but is not limited to a wired connection and a wireless connection. The wireless connection includes but is not limited to: a wireless local area network (wireless local area network, WLAN) technology, Bluetooth (Bluetooth), infrared, near field communication (near field communication, NFC), ZigBee, another wireless communication technology emerging in subsequent development, and the like. The first electronic device and the vehicle 100 may establish a wireless communication technology connection to each other through wireless fidelity direct (wireless fidelity direct, Wi-Fi direct) (also referred to as wireless fidelity peer-to-peer (wireless fidelity peer-to-peer, Wi-Fi P2P)), or the first electronic device and the vehicle 100 may establish a communication connection to each other by logging in to a same account (for example, a Huawei account). The wired connection includes but is not limited to the following: The first electronic device and the vehicle 100 establish a wired communication technology connection to each other by using a USB interface.

The vehicle 100 is configured to obtain one or more of sensor data, vehicle body status information, and information about a passenger in the vehicle. The vehicle 100 determines, based on one or more of the sensor data, the vehicle body status information, and the information about the passenger in the vehicle, whether there is a "child-sitting-down" event, a "child-leaving-seat" event, or a "child-left-unattended" event.

After the vehicle 100 determines the event, the vehicle 100 may display a recommended card corresponding to the event.

In addition/alternatively, the vehicle 100 may send an instruction or information about a recommended card to the first electronic device, so that the recommended card is displayed by using the first electronic device that has a connection relationship with the vehicle 100. In this way, a case in which a user is not in the vehicle but the vehicle 100 displays the recommended card on the vehicle 100 and the user cannot see the recommended card can be avoided.

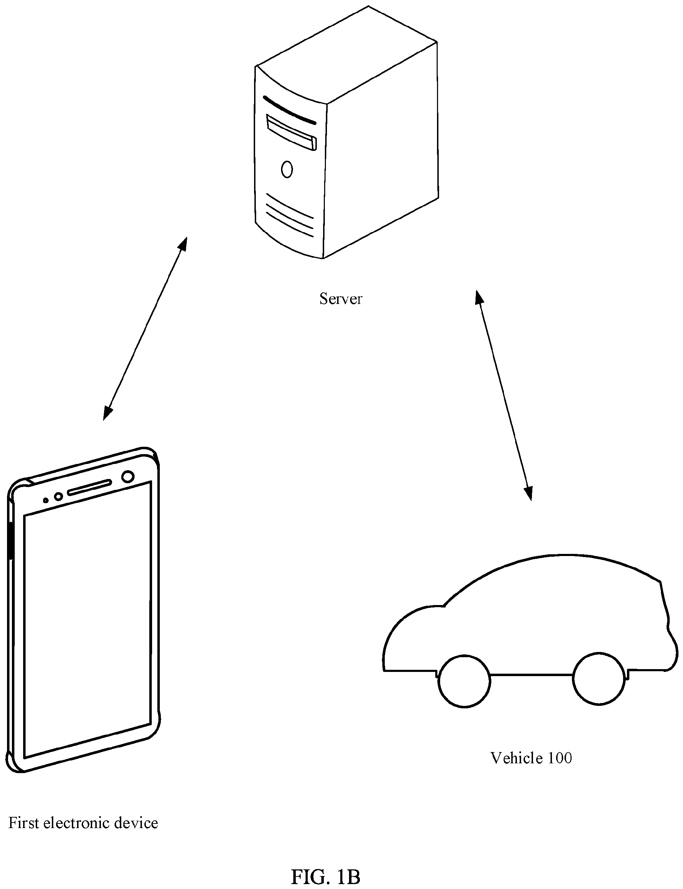

FIG. 1B is an example diagram of an architecture of another system according to an embodiment of this application.

The system includes a vehicle 100, a first electronic device, and a server.

The vehicle 100 may communicate with the server, and the first electronic device may communicate with the server. In this way, the vehicle 100 may communicate with the first electronic device by using the server.

The vehicle 100 is configured to obtain one or more of sensor data, vehicle body status information, and information about a passenger in the vehicle. The vehicle 100 determines, based on one or more of the sensor data, the vehicle body status information, and the information about the passenger in the vehicle, whether there is a "child-sitting-down" event, a "child-leaving-seat" event, or a "child-left-unattended" event.

After the vehicle 100 determines the event, the vehicle 100 may display a recommended card corresponding to the event.

In addition/alternatively, the vehicle 100 may send a first instruction or information about a recommended card to the server, and the server sends the first instruction or the information about the recommended card to the first electronic device, so that the first electronic device can display the recommended card.

Optionally, in the systems shown in FIG. 1A and FIG. 1B, both the vehicle 100 and the first electronic device have a first interface. The interface is used by the first electronic device and the vehicle 100 to communicate with each other, and identify a corresponding instruction or information. For example, when the vehicle 100 displays a first recommended card by using the first electronic device, the vehicle 100 may send the first instruction or information about the first recommended card to the first electronic device by using the first interface. The first electronic device may receive, by using the first interface, the first instruction or the information about the first recommended card that is sent by the first electronic device, and identify that the first instruction or the information about the first recommended card is used to instruct the first electronic device to display the first recommended card.

Optionally, in the systems shown in FIG. 1A and FIG. 1B, both the vehicle 100 and the first electronic device have a first application (for example, a Celia recommendation application), and the vehicle 100 and the first electronic device may obtain the first recommended card by using the first application and display the first recommended card. If the first application is not installed on the first electronic device, when sending the first instruction or the information about the first recommended card to the first electronic device, the vehicle 100 sends installation information of the first application to the first electronic device, so that the first electronic device installs the first application based on the installation information of the first application and displays the first recommended card.

It should be noted that the vehicle 100 and the first electronic device may be a same software system or may be different software systems. This is not limited in this embodiment of this application. The software system includes but is not limited to iOS^{®}, Android^{®}, Harmony^{®}, Windows^{®}, Linux, or another operating system. Harmony^{®} is HarmonyOS of Huawei.

**The following describes a vehicle provided in embodiments of this application.**

The vehicle in embodiments of this application may include motor vehicles such as a large vehicle, a small vehicle, an electric vehicle, a motorcycle, and a tractor.

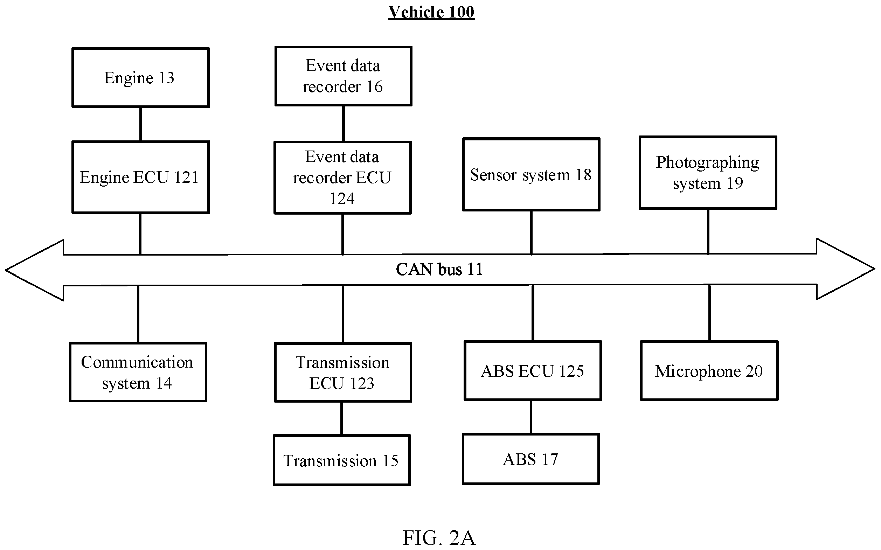

**FIG. 2A** **is a diagram of a hardware structure of a vehicle 100 according to an embodiment of this application.**

As shown in FIG. **2A****,** the vehicle 100 includes a controller area network (controller area network, CAN) bus 11, a plurality of electronic control units (electronic control units, ECUs), an engine 13, a communication system 14, a transmission 15, an event data recorder 16, an antilock braking system (antilock braking system, ABS) 17, a sensor system 18, a photographing system 19, a microphone 20, and the like.

The CAN bus 11 is a serial communication network that supports distributed control or real-time control, and is configured to connect the components of the vehicle 100. Any component on the CAN bus 11 may monitor all data transmitted on the CAN bus 11. A frame transmitted on the CAN bus 11 may include a data frame, a remote frame, an error frame, and an overload frame, and different types of data are transmitted in different frames. In this embodiment of this application, the CAN bus 11 may be configured to transmit data related to each component in a voice instruction-based control method. For specific implementation of the method, refer to detailed descriptions in the following method embodiments.

Not limited to the CAN bus 11, in some other embodiments, the components of the vehicle 100 may alternatively be connected and communicate with each other in another manner. For example, the components may alternatively communicate with each other by using an in-vehicle Ethernet (Ethernet) local interconnect network (local interconnect network, LIN) bus, FlexRay, a common in-vehicle network system (media oriented systems transport, MOST) bus, or the like. This is not limited in this embodiment of this application. The following embodiment is described by using an example in which the components communicate with each other by using the CAN bus 11.

The ECU is equivalent to a processor or a brain of the vehicle 100, and is configured to instruct, based on an instruction obtained from the CAN bus 11 or based on an operation input by a user, a corresponding component to perform a corresponding action. The ECU may include a security chip, a microprocessor (microcontroller unit, MCU), a random access memory (random access memory, RAM), a read-only memory (random-only memory, ROM), an input/output (I/O) interface, an analog/digital converter (A/D converter), and a large scale of integrated circuits such as an input circuit, an output circuit, a shaping circuit, and a drive circuit.

There are various types of ECUs, and different types of ECUs may be used to implement different functions.

The plurality of ECUs in the vehicle 100 may include, for example, an engine ECU 121, a communication system ECU, a transmission ECU 123, an event data recorder ECU 124, and an antilock braking system (antilock brake system, ABS) ECU 125.

The engine ECU 121 is configured to manage the engine and coordinate various functions of the engine, for example, may be configured to start the engine, shut down the engine, and so on. The engine is an apparatus that provides power for the vehicle 100. The engine is a machine that converts a form of energy into mechanical energy. The vehicle 100 may be configured to convert, into mechanical energy, chemical energy obtained through burning of liquid or gas or electric energy, and output power to the outside. Components of the engine may include two main mechanisms: a crank-link mechanism and a valve mechanism, and five systems: a cooling system, a lubrication system, an ignition system, an energy supply system, and a startup system. Main components of the engine are a cylinder body, a cylinder head, a piston, a piston pin, a connecting rod, a crankshaft, a flywheel, and the like.

The communication system 14 is mainly responsible for communicating with the Internet, providing a remote communication interface for the vehicle 100, and providing services such as navigation, entertainment, driving data collection, traveling track recording, vehicle fault monitoring, remote vehicle query and control (for example, locking and unlocking, air conditioner control, vehicle window control, engine torque limitation, engine start and stop, seat adjustment, and query of a battery level, a fuel capacity, and a vehicle door status), driving behavior analysis, wireless hotspot sharing, road rescue, and exception notification.

The communication system 14 may be configured to communicate with a remote vehicle service provider (telematics service provider, TSP) and an electronic device on a user (such as a driver) side, to implement vehicle status display and control on the electronic device. After a user sends a control command by using a vehicle management application on the electronic device, the TSP sends a request instruction to the communication system 14. After obtaining the control command, the communication system 14 sends a control packet by using the CAN bus, controls the vehicle 100, and finally feeds back an operation result to the vehicle management application in electronic device on the user side. To be specific, data read by the communication system 14 by using the CAN bus 11, for example, data such as a vehicle condition report, a driving report, fuel consumption statistics, violation query, a location track, and a driving behavior, may be transmitted to a TSP background system by using a network, and the TSP background system forwards the data to the electronic device on the user side for the user to view.

The communication system 14 may specifically include a communication module.

The communication module may be configured to provide a wireless communication function, and support the vehicle 100 in communicating with another device by using wireless communication technologies such as a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and ultra-wideband (ultra-wideband, UWB). The communication module may be further configured to provide a mobile communication function, and support the vehicle 100 in communicating with another device by using communication technologies such as a global system for mobile communications (global system for mobile communications, GSM), a universal mobile telecommunications system (universal mobile telecommunications system, UMTS), wideband code division multiple access (wideband code division multiple access, WCDMA), time-division code division multiple access (time-division code division multiple access, TD-SCDMA), long term evolution (long term evolution, LTE), 5G, and 6G appearing in the future.

The communication module may establish a connection to and communicate with another device such as a server or a user-side electronic device by using a cellular network-based vehicle-to-everything (vehicle-to-everything, V2X) (cellular V2X, C-V2X) communication technology. The C-V2X may include, for example, long term evolution (long term evolution, LTE)-based V2X (LTE-V2X), 5G-V2X, and the like.

A display screen is configured to provide a visualized interface for a driver. The vehicle 100 may include one or more display screens, for example, may include an in-vehicle display screen disposed in front of a driver's seat and a display screen that is disposed above a seat and that is configured to display a surrounding situation, and may further include a head-up display (head-up display, HUD) that projects information onto a windshield, and the like. A display screen, in the vehicle 100, that is provided in a subsequent embodiment and that is configured to display a user interface may be an in-vehicle display screen disposed beside a seat, may be a display screen disposed above a seat, or may be an HUD or the like. This is not limited herein. For the user interface displayed on the display screen in the vehicle 100, refer to detailed descriptions in a subsequent embodiment. Details are not described herein.

The communication system 14 may also be referred to as an in-vehicle infotainment system, a remote information processor, a vehicle gateway, or the like. This is not limited in this embodiment of this application.

The transmission ECU 123 is configured to manage the transmission.

The transmission 15 may be a mechanism used to change a rotation speed and torque of the engine, and can change a transmission ratio between an output shaft and an input shaft fixedly or based on a gear. Components of the transmission 15 may include a variable-speed transmission mechanism, a control mechanism, a power output mechanism, and the like. A main function of the variable-speed transmission mechanism is to change values and directions of torque and a rotation speed. A main function of the control mechanism is to control the transmission mechanism to change a transmission ratio of the transmission, that is, to implement gear shifting, so as to change a speed and change torque.

The event data recorder ECU 124 is configured to manage the event data recorder 16.

Components of the event data recorder 16 may include a host, a vehicle speed sensor, data analysis software, and the like. The event data recorder 16 is an instrument that records an image and a sound generated during traveling of the vehicle, including related information such as driving time, a speed, and a location. In this embodiment of this application, during traveling of the vehicle, the vehicle speed sensor collects a wheel rotation speed, and sends vehicle speed information to the event data recorder 16 by using the CAN bus.

The ABS ECU 125 is configured to manage the ABS 17.

The ABS 17 automatically controls braking force of a brake during vehicle braking, so that a wheel is not locked and is in a rolling and sliding state to ensure that adhesion between the wheel and the ground has a maximum value. During braking, when an electronic control apparatus determines, based on a wheel rotation speed signal that is input by a wheel rotation speed sensor, that a wheel tends to be locked, the ABS enters an antilock braking pressure adjustment process.

The sensor system 18 may include a pressure sensor or a gravity sensor, an infrared sensor or a microwave sensor, an acceleration sensor, a vehicle speed sensor, a vibration sensor, a gyroscope sensor, a radar sensor, a signal transmitter, a signal receiver, and the like. The pressure sensor or the gravity sensor may be disposed under a seat, and the pressure sensor or the gravity sensor is configured to collect pressure data or gravity data to determine whether there is constantly a person in a first seat. The infrared sensor or the microwave sensor may be disposed at a location that is in front of a seat and that is at a specific height away from the seat. The infrared sensor or the microwave sensor is configured to collect infrared data or microwave data to determine whether a person or an object is in the first seat. The acceleration sensor and the vehicle speed sensor are configured to detect a speed of the vehicle 100. The vibration sensor may be disposed below a seat, on a seat belt, on a back of a chair, on an operation panel, in an airbag, or at another location, and is configured to detect whether the vehicle 100 is collided and a location of a user. The gyroscope sensor may be configured to determine a motion posture of the vehicle 100. The radar sensor may include a laser radar, an ultrasonic radar, a millimeter-wave radar, and the like. The radar sensor is configured to transmit an electromagnetic wave to illuminate a target and receive an echo of the target, to obtain information such as a distance from the target to an electromagnetic wave transmission point, a distance change rate (radial speed), an orientation, a height, and the like, so as to identify another vehicle, a pedestrian, a roadblock, or the like near the vehicle 100. The signal transmitter and the signal receiver are configured to send and receive a signal. The signal may be used to detect a location of a user, and the signal may be, for example, an ultrasonic wave, a millimeter wave, or a laser.

The photographing system 19 may include a plurality of cameras, and the camera is configured to capture a still image or a video. The camera in the photographing system 19 may be disposed at a location such as in front of the vehicle, behind the vehicle, on a side, or inside the vehicle, so as to implement functions such as assisted driving, driving recording, panoramic view, and in-vehicle monitoring.

The sensor system 18 and the photographing system 19 may be configured to detect a surrounding environment, so that the vehicle 100 makes a corresponding decision to cope with an environment change. For example, the sensor system 18 and the photographing system 19 may be configured to complete a task of focusing on the surrounding environment in a self-driving phase.

The microphone 20, also referred to as a "mike" or a "mic", is configured to convert a sound signal into an electrical signal. When making a call or outputting a voice instruction, a user may put the mouth close to the microphone 20 to make a sound, to input a sound signal to the microphone 20. At least one microphone 20 may be disposed in the vehicle 100. In some other embodiments, two microphones 20 may be disposed in the vehicle 100, to implement a noise reduction function in addition to collect a sound signal. In some other embodiments, three, four, or more microphones 20 may alternatively be disposed in the vehicle 100 to form a microphone array, to collect a sound signal, reduce noise, and further identify a sound source, implement a directional recording function, and the like.

In addition, the vehicle 100 may further include a plurality of interfaces, for example, a USB interface, an RS-232 interface, and an RS-485 interface, and may be externally connected to a camera, a microphone, a headset, and a user-side electronic device.

In this embodiment of this application, the microphone 20 may be configured to detect a voice instruction input by a user. The sensor system 18, the photographing system 19, the communication system 14, and the like may be configured to obtain role information of the user who inputs the voice instruction. For a manner of obtaining the role information of the user by each component in the vehicle 100, refer to related descriptions in subsequent method embodiments.

In some embodiments, the sensor system 18, the photographing system 19, the communication system 14, and the like are not only configured to obtain the role information of the user who inputs the voice instruction, but also may be configured to obtain role information of another user.

In some embodiments, the sensor system 18, the photographing system 19, the communication system 14, and the like may be configured to obtain a vehicle status of the vehicle 100.

In some embodiments, a memory in the vehicle 100 may be configured to store a binding relationship between the vehicle and a user.

It may be understood that the structure illustrated in this embodiment of this application does not constitute a specific limitation on a vehicle system. The vehicle 100 may include more or fewer components than those shown in the figure, or combine some components, or split some components, or have different component arrangements. The components shown in the figure may be implemented by hardware, software, or a combination of software and hardware.

For example, the vehicle 100 may further include a separate memory, a battery, a vehicle light, a rain wiper, a dashboard, a sound box, an in-vehicle terminal (transmission control unit, TCU), an auxiliary control unit (auxiliary control unit, ACU), a passive entry passive start (passive entry passive start, PEPS) system, an on board unit (on board unit, OBU), a vehicle body control module (body control module, BCM), a charging interface, and the like. The memory may be configured to store permission information for different roles in the vehicle 100. The permission information indicates use permission that a role has or does not have for the vehicle 100. In some embodiments, the memory may be configured to store permission information of different roles in the vehicle 100 in different vehicle statuses. In some embodiments, the memory may be configured to store permission information of different roles in the vehicle 100 when the different roles have different other roles.

For specific functions of the components of the vehicle 100, refer to descriptions in subsequent method embodiments. Details are not described herein.

A software operating system (operating system, OS) configured in the vehicle 100 may include but is not limited to Harmony^{®}, Android^{®}, iOS^{®}, Linux^{®}, a Windows embedded compact (Windows Embedded Compact, WinCE) operating system, and the like.

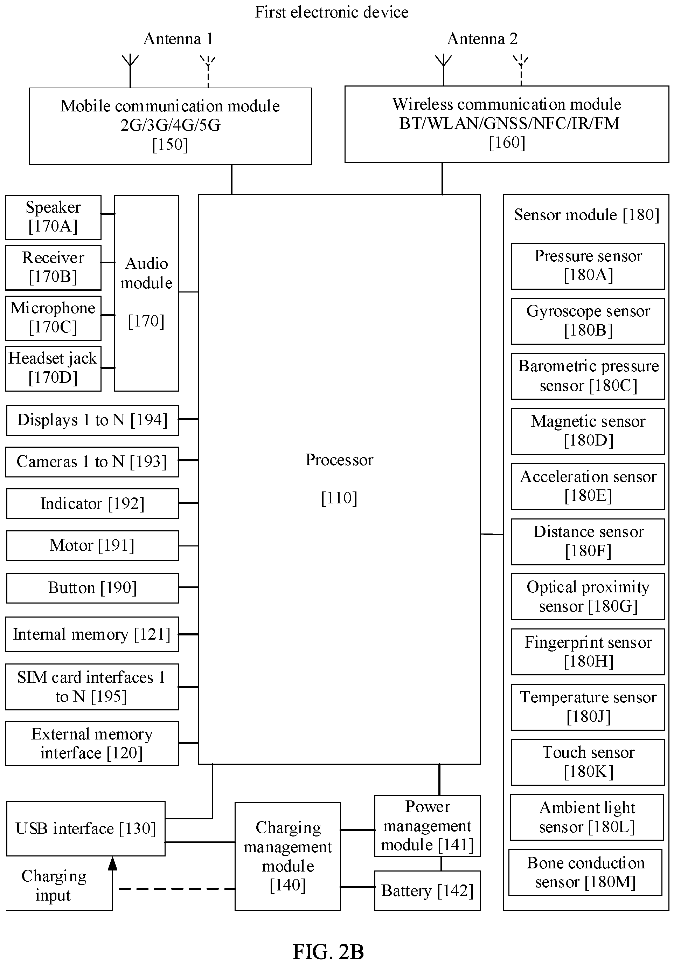

FIG. 2B is an example diagram of a structure of a first electronic device.

The structure of the first electronic device shown in FIG. 2B is used by the first electronic device to perform the riding service card recommendation method provided in embodiments of this application.

The first electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device. A specific type of the electronic device is not limited in this embodiment of this application. The following embodiment of this application is described by using an example in which the first electronic device is a mobile phone.

The first electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a timing signal, to control instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

It may be understood that an interface connection relationship between the modules illustrated in this embodiment of the present invention is merely used as an example for description, and does not constitute a limitation on the structure of the first electronic device. In some other embodiments of this application, the first electronic device may alternatively use an interface connection manner different from that in the foregoing embodiment, or use a combination of a plurality of interface connection manners.

The charging management module 140 is configured to receive a charging input from a charger.

The power management module 141 is configured to connect the battery 142 and the charging management module 140 to the processor 110. In some other embodiments, the power management module 141 and the charging management module 140 may alternatively be disposed in a same device.

A wireless communication function of the first electronic device may be implemented by using the antenna 1, the antenna 2, the mobile communication module 150, the wireless communication module 160, the modem processor, the baseband processor, and the like. The first electronic device may communicate with the vehicle 100 or a server by using the wireless communication function.

The antenna 1 and the antenna 2 are configured to transmit and receive an electromagnetic wave signal. Each antenna in the first electronic device may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 150 may provide a solution for wireless communication including 2G/3G/4G/5G and the like applied to the first electronic device. The mobile communication module 150 may include at least one filter, switch, power amplifier, low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1.

In some embodiments, in the first electronic device, the antenna 1 is coupled to the mobile communication module 150, and the antenna 2 is coupled to the wireless communication module 160, so that the first electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The first electronic device implements a display function by using the GPU, the display 194, the application processor, and the like. The GPU is a microprocessor for image processing, and is connected to the display 194 and the application processor. The GPU is configured to perform mathematical and geometric calculation for image rendering. The processor 110 may include one or more GPUs that execute program instructions to generate or change displayed information.

The display 194 is configured to display an image, a video, and the like. In this embodiment of this application, the display 194 is configured to display a recommended card. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a miniled, a microLed, a microoLed, a quantum dot light emitting diode (quantum dot light emitting diode, QLED), or the like. In some embodiments, the first electronic device may include one or N displays 194, where N is a positive integer greater than 1.

The first electronic device may implement a photographing function by using the ISP, the camera 193, the video codec, the GPU, the display 194, the application processor, and the like.

The internal memory 121 may include one or more random access memories (random access memories, RAMs) and one or more non-volatile memories (non-volatile memories, NVMs).

The external memory interface 120 may be configured to connect to an external non-volatile memory, to expand a storage capability of the first electronic device.

The first electronic device may implement an audio function, such as music playing and recording, by using the audio module 170, the speaker 170A, the receiver 170B, the microphone 170C, the headset jack 170D, the application processor, and the like.

The pressure sensor 180A is configured to sense a pressure signal, and may convert the pressure signal into an electrical signal. The gyroscope sensor 180B may be configured to determine a motion posture of the first electronic device. The barometric pressure sensor 180C is configured to measure barometric pressure. The magnetic sensor 180D includes a Hall sensor. The acceleration sensor 180E may detect magnitudes of acceleration of the first electronic device in all directions (usually on three axes). The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The temperature sensor 180J is configured to detect temperature. The touch sensor 180K is also referred to as a "touch device". The bone conduction sensor 180M may obtain a vibration signal. The button 190 includes a power on/off button, a volume button, and the like.

The motor 191 may generate a vibration prompt.

The indicator 192 may be an indicator light, and may be configured to indicate a charging status or a power change, and may also be configured to indicate a message, a missed call, a notification, or the like.

The SIM card interface 195 is configured to connect to a SIM card.

A software operating system (operating system, OS) of the first electronic device may include but is not limited to Harmony^{®}, Android^{®}, iOS^{®}, Linux^{®}, a Windows embedded compact (Windows Embedded Compact, WinCE) operating system, and the like.

It may be understood that the structure illustrated in this embodiment of the present invention does not constitute a specific limitation on the first electronic device. In some other embodiments of this application, the first electronic device may include more or fewer components than those shown in the figure, or combine some components, or split some components, or have different component arrangements. The components shown in the figure may be implemented by hardware, software, or a combination of software and hardware.

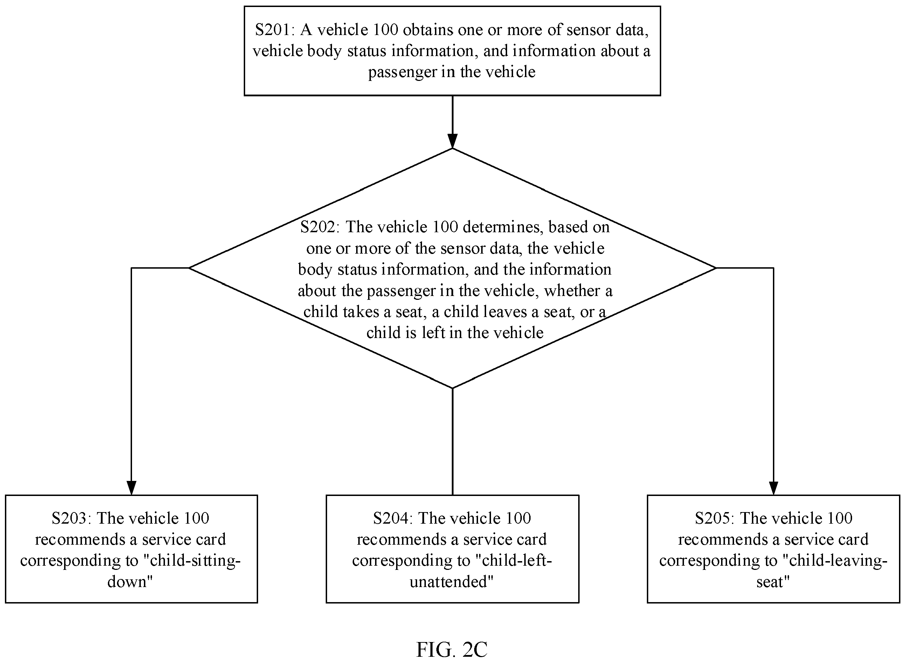

**FIG. 2C** **is a diagram in which a vehicle 100 generates a recommended card according to an embodiment of this application.**

S201: The vehicle 100 obtains one or more sensor data, vehicle body status information, and information about a passenger in the vehicle. The sensor data includes but is not limited to infrared sensor data, microwave sensor data, pressure sensor data, gravity sensor data, or the like. The infrared sensor data or the microwave sensor data is mainly used to determine whether a child takes a seat in the vehicle. The vehicle body status information includes but is not limited to: a vehicle is stalled, a vehicle door is first opened and then closed, a vehicle door is locked, a vehicle window is locked, and the like. The information about the passenger in the vehicle includes but is not limited to a quantity of passengers in the vehicle and a passenger type. The passenger type may be a driver, other passengers, or the like. The other passengers may be further classified into adults, children, and the like. One or more of the sensor data, the vehicle body status information, and the information about the passenger in the vehicle are used to determine whether a child is left in the vehicle.

S202: The vehicle 100 determines, based on one or more of the sensor data, the vehicle body status information, and the information about the passenger in the vehicle, whether a child takes a seat, a child leaves a seat, or a child is left in the vehicle.

After the vehicle 100 obtains one or more of the sensor data, the vehicle body status information, and the information about the passenger in the vehicle, the vehicle 100 determines, based on the one or more of the sensor data, the vehicle body status information, and the information about the passenger in the vehicle, whether there is a "child-sitting-down" event, a "child-leaving-seat" event, or a "child being left in a vehicle" event.

How the vehicle 100 determines whether there is a "child-sitting-down" event, a "child-leaving-seat" event, or a "child being left in a vehicle" event is described in detail in a subsequent embodiment. Details are not described herein in this embodiment of this application.

S203: The vehicle 100 recommends a service card corresponding to "child-sitting-down".

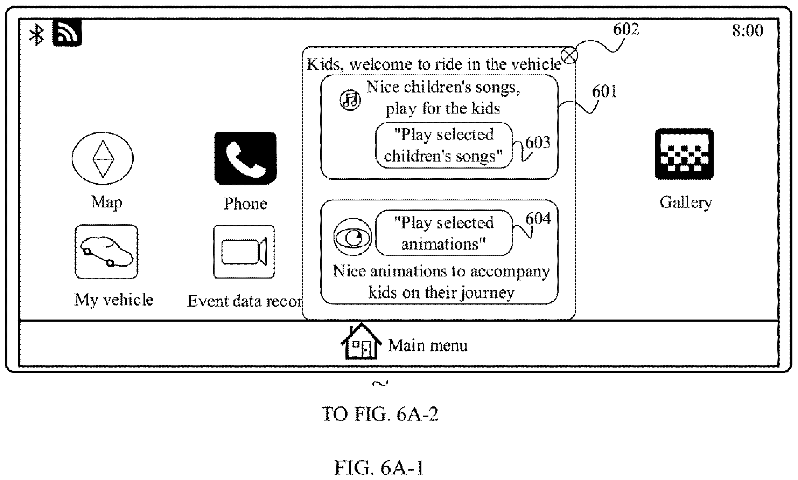

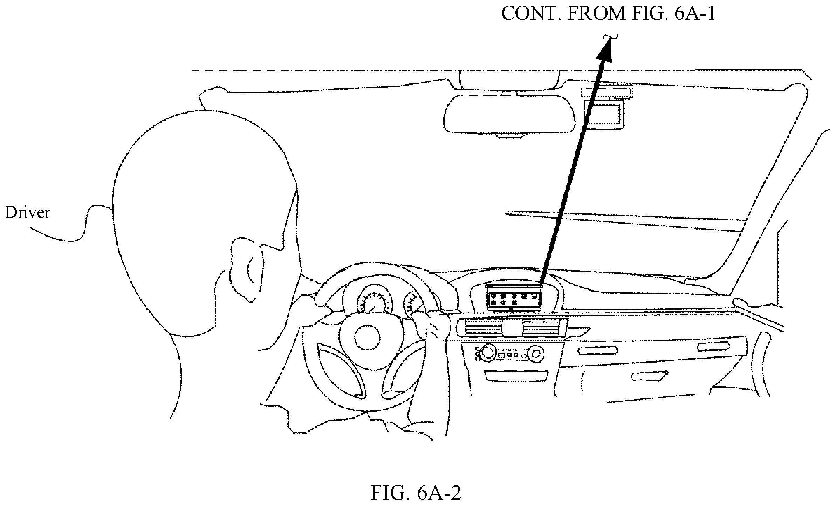

After the vehicle 100 determines the "child-sitting-down" event, the vehicle 100 recommends a service card corresponding to the "child-sitting-down" event. Specifically, the vehicle 100 may display, on the vehicle 100, the service card corresponding to the "child-sitting-down" event. For details, refer to subsequent embodiments shown in FIG. 6A-1 to FIG. 6B.

Alternatively, the vehicle 100 may display, by using a second electronic device, the service card corresponding to the "child-sitting-down" event. For details, refer to a subsequent embodiment shown in FIG. 7A.

S204: The vehicle 100 recommends a service card corresponding to "child-left-unattended".

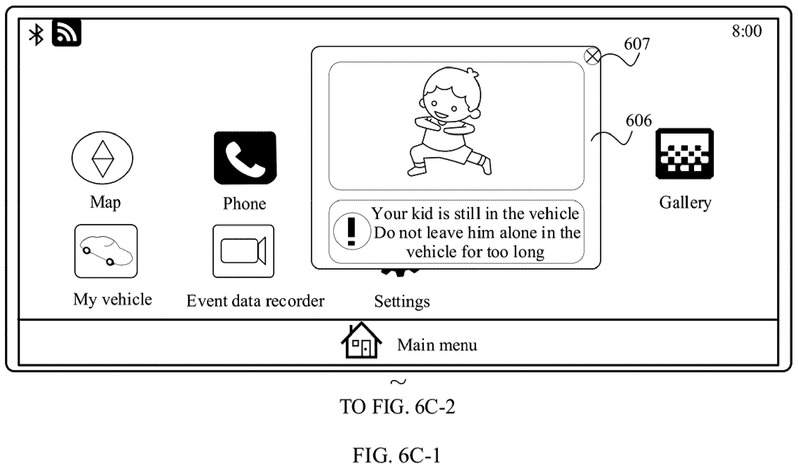

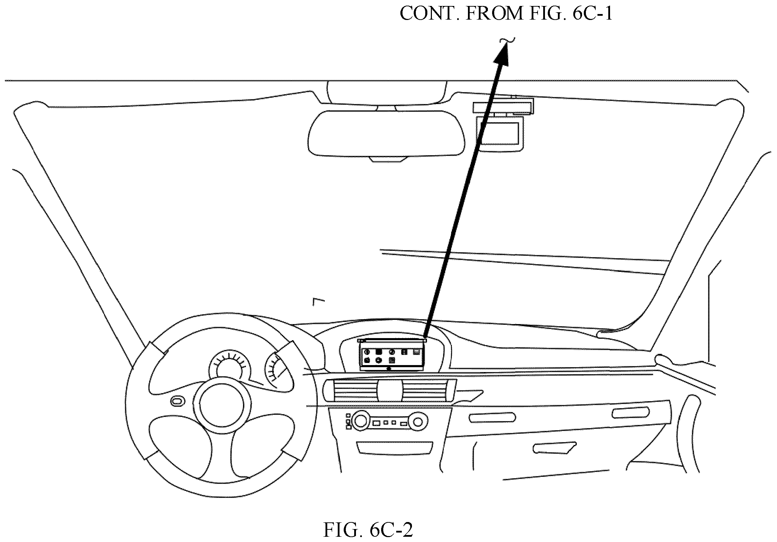

After the vehicle 100 determines a "child-left-unattended" event, the vehicle 100 recommends a service card corresponding to the "child-left-unattended" event. Specifically, the vehicle 100 may display, on the vehicle 100, the service card corresponding to the "child-left-unattended" event. For details, refer to subsequent embodiments shown in FIG. 6C-1 to FIG. 6D-2.

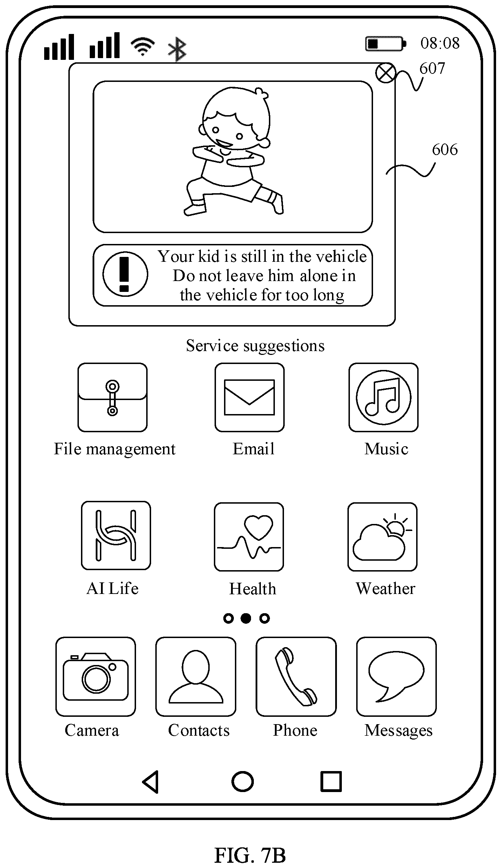

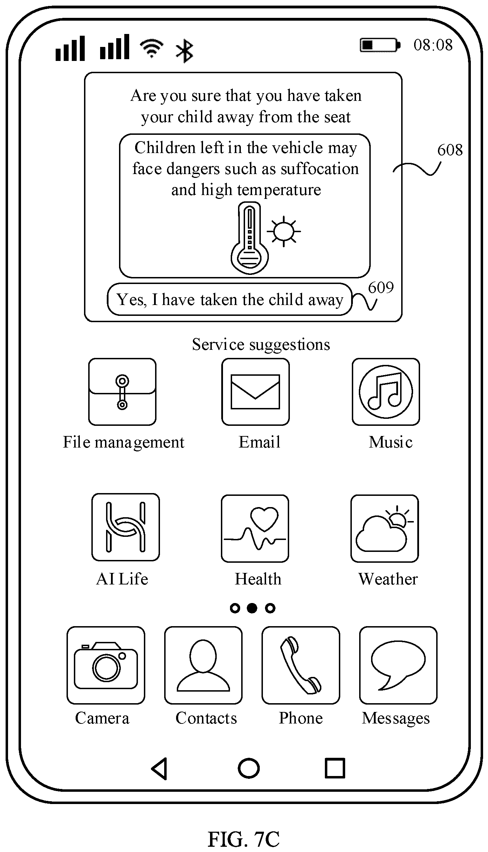

Alternatively, the vehicle 100 may display, by using a first electronic device, the service card corresponding to the "child-left-unattended" event. For details, refer to subsequent embodiments shown in FIG. 7B and FIG. 7C.

S205: The vehicle 100 recommends a service card corresponding to "child-leaving-seat".

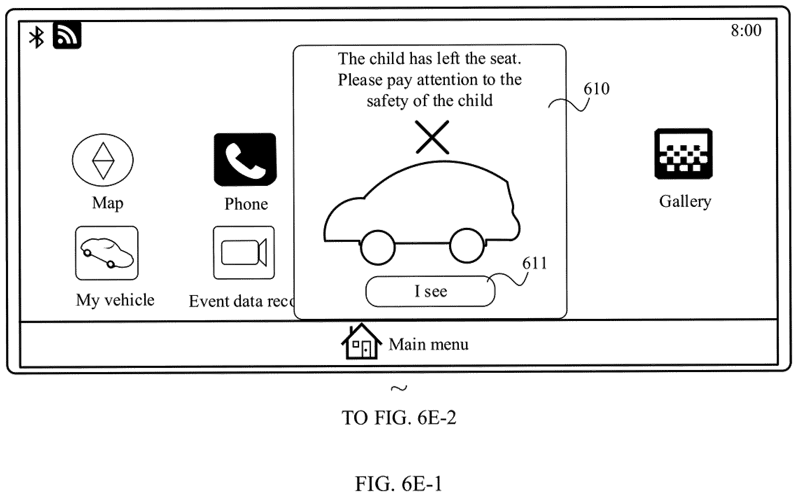

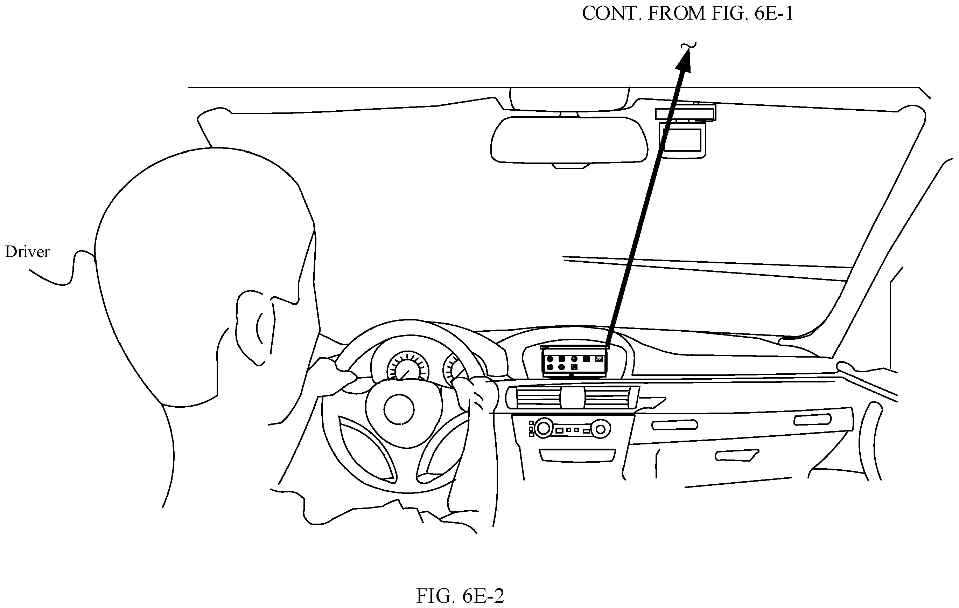

After the vehicle 100 determines a "child-leaving-seat" event, the vehicle 100 recommends a service card corresponding to the "child-leaving-seat" event. Specifically, the vehicle 100 may display, on the vehicle 100, the service card corresponding to the "child-leaving-seat" event. For details, refer to a subsequent embodiment shown in FIG. 6E-1.

Alternatively, the vehicle 100 may display, by using the first electronic device, the service card corresponding to the "child-leaving-seat" event. For details, refer to a subsequent embodiment shown in FIG. 6D-1 and FIG. 6D-2.

The following describes how the vehicle 100 determines a "child-sitting-down" event, a "child-leaving-seat" event, and a "child-left-unattended" event.

### I. "Child-sitting-down" event

The "child-sitting-down" event means that a child enters the vehicle 100 and sits in a first seat in the vehicle 100.

The vehicle 100 may determine the "child-sitting-down" event based on one or more of sensor data, a vehicle status, and information about a passenger in the vehicle.

The "child-sitting-down" event means that when one or more of the sensor data, the vehicle status, and the information about the passenger in the vehicle meet a specific condition, the vehicle 100 may display, on the vehicle 100, a recommended card for "child-sitting-down". The recommended card is used to notify a user that a child has taken a seat, and please pay attention to safety of the child.

The condition may be one or more of the following: a driver seats in the driver's seat, and a child is in the first seat in the vehicle. The first condition may alternatively be another condition, for example, the vehicle 100 is started, an air conditioner of the vehicle 100 is started, or music is started. A condition for determining the "child-sitting-down" event is not limited in this embodiment of this application.

Optionally, the vehicle 100 may determine, based on a plurality of levels of detection mechanisms, whether a child takes the first seat, to improve accuracy of determining the "child-sitting-down" event by the vehicle 100.

In some embodiments, the vehicle 100 may alternatively determine "child-sitting-down" based on only any one of the plurality of levels of detection mechanisms.

The following describes the plurality of levels of detection mechanisms.

**A first-level detection mechanism is** that the vehicle 100 monitors, based on a microwave sensor and/or an infrared sensor in the vehicle, whether a person or an object is on the first seat. After determining that a person is in the first seat, the vehicle 100 triggers a second-level detection mechanism.

For the infrared sensor, the infrared sensor determines, by detecting infrared radiation from a human body or an object in the vehicle, whether a person or an object is on the first seat.

Optionally, the vehicle 100 starts the second-level detection mechanism only when the vehicle 100 determines, based on microwave data or infrared data, that a person is in the first seat in specific time (for example, in 5s). This can avoid a case in which a person changes a seat, for example, a person changes from a left seat in a back row to a right seat in the back row, and the microwave sensor and/or the infrared sensor scan/scans the person and directly triggers the second-level detection mechanism, thereby reducing occurrence of mis-determining.

Optionally, the microwave sensor and/or the infrared sensor may be disposed on a back of a chair in the vehicle and at a height of about 20 cm from the chair. In this way, considering a height of a child, an installation location of the microwave sensor and/or an installation location of the infrared sensor are/is prevented from being set to be excessively high to avoid a case in which the child cannot be identified.

Optionally, if a child safety seat is installed on the vehicle 100, the microwave sensor and/or the infrared sensor may be installed at a location about 20 cm away from a bottom of the child safety seat.

It should be noted that, the microwave sensor and/or the infrared sensor may be equipped in the vehicle 100 at delivery, or may be subsequently installed by a user. This is not limited in this embodiment of this application.

**The second-level detection mechanism** is that the vehicle 100 determines, based on pressure data collected by a pressure sensor installed on the first seat or gravity data collected by a gravity sensor, that the person in the first seat is a child. In this case, the vehicle 100 may display a recommended card corresponding to a "child-sitting-down" event.

It should be noted that, there is a large difference between weights of a child and an adult. Generally, a child under 10 years old has a weight less than 50 kilograms.

If the vehicle 100 determines, based on the pressure data collected by the pressure sensor or the gravity data collected by the gravity sensor, that a weight of the person in the first seat is less than 50 kilograms, and the pressure data or the gravity data is stable for specific time, the vehicle 100 may determine that there is a child in the first seat, that is, the vehicle 100 determines the "child-sitting-down" event.

Optionally, in some embodiments, the first-level detection mechanism may alternatively be that the vehicle 100 determines, based on the pressure data collected by the pressure sensor installed on the first seat or the gravity data collected by the gravity sensor, that there may be a child or an object on the first seat.

The second-level detection mechanism is that the vehicle 100 further determines, based on the microwave sensor and/or the infrared sensor in the vehicle, whether a person or an object is on the first seat. After determining that a person is in the first seat, the vehicle 100 may determine, with reference to the first-level detection mechanism, that the person in the first seat is a child. In this case, the vehicle 100 may display the recommended card corresponding to the "child-sitting-down" event.

It should be noted that specific implementation of the first-level detection mechanism and the second-level detection mechanism are not limited in this embodiment of this application.

Optionally, the vehicle 100 may alternatively determine, based on the first-level detection mechanism and/or the second-level detection mechanism, whether the driver is in the driver's seat. Details are not described herein in this embodiment of this application.

### II. "Child-leaving-seat" event

The "child-leaving-seat" event means that a child leaves the first seat.

A "child-leaving-seat" event means that when one or more of the sensor data, the vehicle status, and the information about the passenger in the vehicle meet a specific condition, the vehicle 100 may display, on the vehicle 100, a recommended card for "child-leaving-seat". The recommended card is used to notify a user that a child has left a seat, and pay attention to safety of the child.

The condition may be one or more of the following: the first seat changes from occupied by a child to vacant, a rear vehicle door changes from closed to open, and so on.

The vehicle 100 may determine, in any one or more of the following manners, that the first seat changes from occupied by a child to vacant.

Manner 1: For pressure data collected by a pressure sensor installed on the first seat in the vehicle 100 or gravity data collected by a gravity sensor, if it is determined that the pressure data or the gravity data suddenly changes, that is, the pressure data or the gravity data significantly decreases, and the pressure data or the gravity data stabilizes at a relatively small value for specific time after significantly decreasing, the vehicle 100 may determine that the child has left the seat.

Manner 2: If a microwave sensor and/or an infrared sensor installed on the first seat in the vehicle 100 cannot detect a person and this case lasts for specific time, the vehicle 100 may determine that the child has left the seat.

### III. "Child-left-unattended" event

The "child-left-unattended" event means that when one or more of the sensor data, the vehicle status, and the information about the passenger in the vehicle meet a specific condition, the vehicle 100 may display, on the vehicle 100, a recommended card for "child-left-unattended". The recommended card is used to prompt a user to immediately take a child away from a seat.

The condition may be one or more of the following: the driver leaves the driver's seat, and a child is in the first seat in the vehicle. The first condition may alternatively be another condition, for example, the vehicle is stalled, a distance between the driver and the vehicle 100 exceeds a threshold, a vehicle door is first opened and then closed, the vehicle door is locked, a vehicle window is locked, and only a child is in the first seat in the vehicle and there is no other passenger in the vehicle. A condition for determining the "child-left-unattended" event is not limited in this embodiment of this application.

For example, the "child-left-unattended" event may mean that after the vehicle 100 is stalled, the child is still in the first seat in the vehicle 100; the "child-left-unattended" event may mean that there is no other passenger in the vehicle 100 other than the child in the first seat, or time for which there is no other passenger in the vehicle 100 other than the child in the first seat exceeds specific time; the "child-left-unattended" event may mean that the driver leaves the driver's seat and the child is still in the first seat, or mean that time for which the driver leaves the driver's seat and the child is still in the first seat exceeds specific time; or the "child-left-unattended" event may mean that the child is still in the first seat, the vehicle door is first opened and then closed, and the vehicle door is locked; or the child is still in the first seat, the vehicle door is first opened and then closed, and time for which the vehicle door is locked exceeds specific time.

The vehicle 100 may determine, based on pressure data collected by a pressure sensor on the driver's seat or gravity data collected by a gravity sensor, whether there is a person in the driver's seat.

That a distance between the driver and the vehicle 100 exceeds a threshold means the following: The driver leaves the driver's seat, and a distance between a first electronic device and the vehicle 100 exceeds the threshold. The first electronic device is an electronic device of the driver.

The vehicle 100 may determine, in any one or more of the following manners, that the distance between the first electronic device and the vehicle 100 exceeds the threshold.

Manner 1: The first electronic device establishes a communication connection to the vehicle 100. At a specific moment, if the first electronic device disconnects the communication connection to the vehicle 100, it may be determined that the distance between the first electronic device and the vehicle 100 exceeds the threshold.

For example, the first electronic device previously establishes a Bluetooth connection to the vehicle 100. At a specific moment, if the first electronic device disconnects the Bluetooth connection to the vehicle 100, it may be determined that the distance between the first electronic device and the vehicle 100 exceeds the threshold.

Manner 2: The first electronic device may obtain location information (for example, GPS information) of the first electronic device in real time, the vehicle 100 may obtain location information (for example, GPS information) of the vehicle 100 in real time, the first electronic device sends the GPS information of the first electronic device to a server, and the vehicle 100 sends the GPS information of the vehicle 100 to the server. After obtaining the GPS information of the first electronic device and the GPS information of the vehicle 100, the server determines the distance between the first electronic device and the vehicle 100 based on the GPS information of the first electronic device and the GPS information of the vehicle 100. If the distance between the first electronic device and the vehicle 100 exceeds the threshold, the server sends an instruction to the vehicle 100. The instruction is used to indicate that the distance between the vehicle 100 and the first electronic device exceeds the threshold.

The vehicle 100 may alternatively determine, in another manner, that the distance between the first electronic device and the vehicle 100 exceeds the threshold. This is not limited in this embodiment of this application.

After the vehicle 100 determines the "child-sitting-down" event, the vehicle 100 may monitor pressure data or gravity data on the first seat to determine whether there is a child in the first seat. For example, if the vehicle 100 detects that the pressure data or the gravity data does not change significantly, and the pressure data or the gravity data is continuously stable near a value, the vehicle 100 may determine that the child is still in the first seat.

Optionally, the vehicle 100 may alternatively determine, with reference to audio data or image data in the vehicle 100, whether there is a "child-sitting-down" event, a "child-leaving-seat" event, or a "child-left-unattended" event, to further determine whether there is a child in the first seat. In this way, accuracy of determining, by the vehicle 100, whether there is a child in the first seat can be further improved.

**That the vehicle 100 detects a riding status of a child in the vehicle may be that the vehicle 100 has a child safety monitoring mode. After the child safety monitoring mode is enabled, the vehicle 100 may detect a behavior of the child in the vehicle 100. After the child safety monitoring mode is disabled, the vehicle 100 may stop detecting the behavior of the child in the vehicle 100, to reduce power consumption** of the **vehicle 100.**

**The vehicle 100 may enable the child safety monitoring mode in any one of the following manners:**
Manner 1: The vehicle 100 receives an operation of a user to enable the child safety monitoring mode.

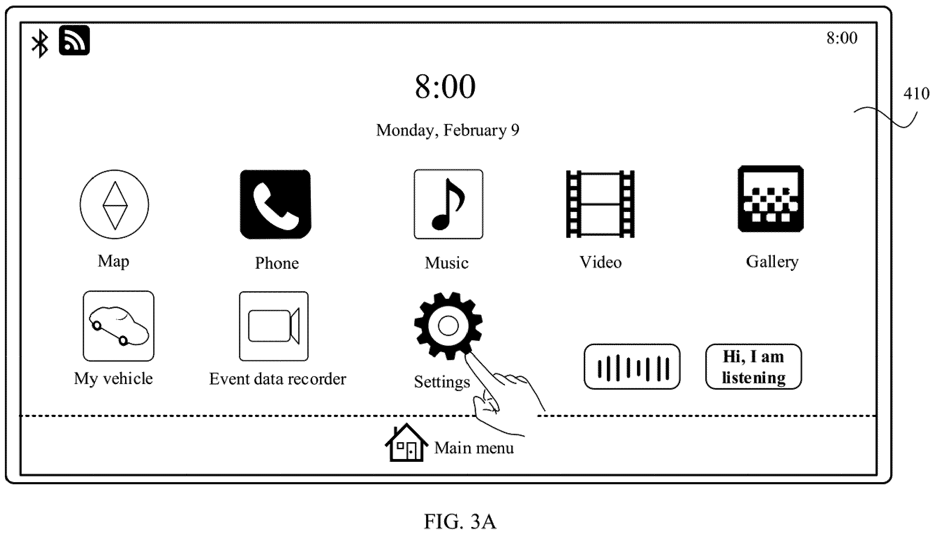

FIG. 3A to FIG. 3D are example diagrams in which the vehicle 100 receives an operation of a user to enable the child safety monitoring mode.

FIG. 3A shows an example user interface 410 of a central display screen on a vehicle 100.

The user interface 410 includes icons of a plurality of applications, for example, an icon of a Map application, an icon of a Phone application, an icon of a Music application, an icon of a Video application, an icon of a Gallery application, an icon of a "My vehicle" application, an icon of an Event data recorder application, and an icon of a Settings application. The user interface 410 may further include a voice recognition icon and a voice prompt box. The voice recognition icon is used to inform a user that an electronic device has woken up a voice assistant, and the voice prompt box is used to display text information corresponding to a voice that is detected by the vehicle 100 and that is spoken by a user. When a user does not makes a voice after speaking a wake-up word, the voice prompt box displays "Hi, I am listening" or other prompt words. In addition, the vehicle 100 may further play prompt information "Hi, I am listening" by using a voice, to prompt the user that the user can start to input a voice instruction. The user interface 410 may further include a time indicator (for example, 8:00), a date indicator (for example, Monday, February 9), a Bluetooth identifier, a Wi-Fi identifier, and the like.

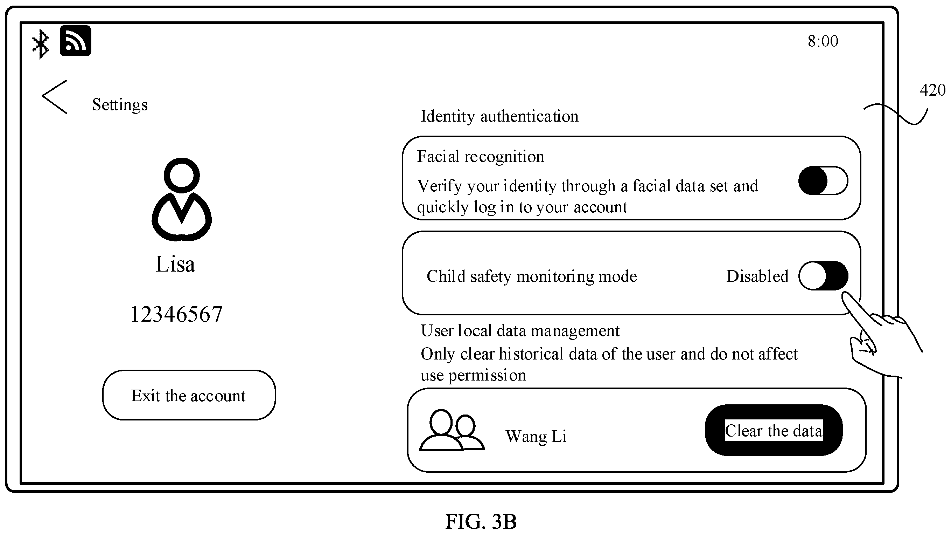

The vehicle 100 may receive an input operation performed by a user on an icon of one or more applications, and the vehicle 100 displays an interface of a corresponding application in response to the input operation of the user. For example, the vehicle 100 may receive an input operation (for example, a tap) performed by the user on the icon of the Settings application, and in response to the input operation of the user, the vehicle 100 displays a user interface 420 shown in FIG. 3B.

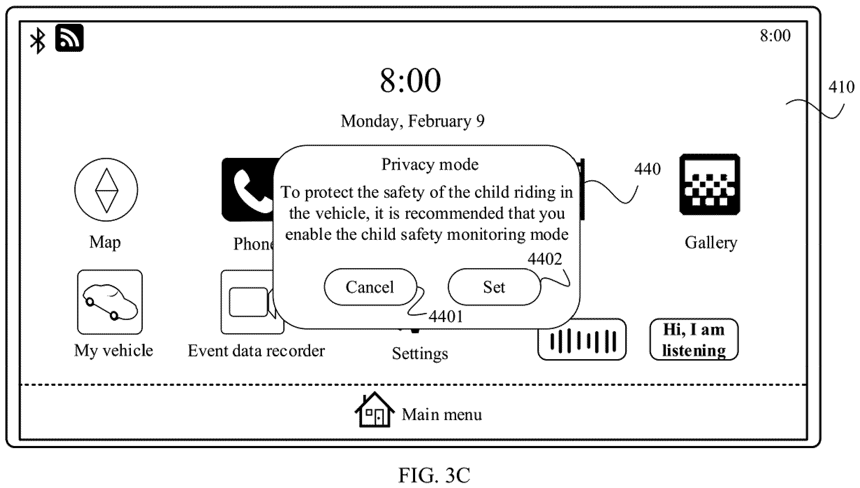

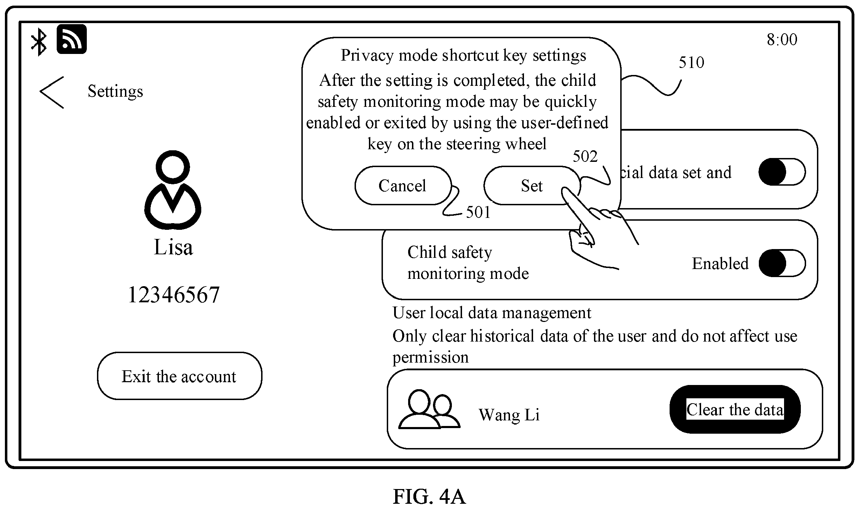

In some embodiments, FIG. 3A and FIG. 3B show example specific implementation of receiving, by the vehicle 100, a user operation to enable the child safety monitoring mode. In some embodiments, the vehicle 100 may actively prompt a user whether the child safety monitoring mode needs to be enabled. When the vehicle 100 detects that a child takes a seat in the vehicle but the vehicle 100 does not enable the child safety monitoring mode, the vehicle 100 may display prompt information 440 shown in FIG. 3C. The prompt information 440 is used to inform a user that vehicle 100 does not enable the child safety monitoring mode and whether the child safety monitoring mode needs to be enabled. The prompt information 440 further includes a control 4401 and a control 4402. Prompt content of the prompt information 440 may be "To protect the safety of the child riding in the vehicle, it is recommended that you enable the child safety monitoring mode." The vehicle 100 may receive an input operation (for example, a tap) performed by a user on the control 4401, and in response to the input operation of the user, the vehicle 100 does not enable the child safety monitoring mode. In this case, the vehicle 100 may display the user interface shown in FIG. 3A. The vehicle 100 may alternatively receive an input operation (for example, a tap) performed by a user on the control 4402, and in response to the input operation of the user, the vehicle 100 needs to enable the child safety monitoring mode. In this case, the vehicle may display the user interface 420 shown in FIG. 3B, or may display a user interface subsequently shown in FIG. 4A.

As shown in FIG. 3B, the user interface 420 shows an example user interface displayed after a vehicle owner logs in to the vehicle 100 by using a primary account. The user interface 420 displays information about an account logged in to by the vehicle owner, an identity authentication option, and a user local data management option. The vehicle 100 may receive an upward/downward sliding operation or a leftward/rightward sliding operation performed by a user on the user interface 420, so that more setting options can be displayed on the central display screen.

The information about the account logged in to by the vehicle owner includes a name (for example, Lisa) of the vehicle owner, the account (12346567) of the vehicle owner, and an option for exiting a current login account. The identity authentication option includes a facial recognition function enabled/disabled option, a child safety monitoring mode enabled/disabled option, and an option for clearing an account "Wang Li". As shown in FIG. 3B, currently, a facial recognition function is enabled, and the child safety monitoring mode is disabled.

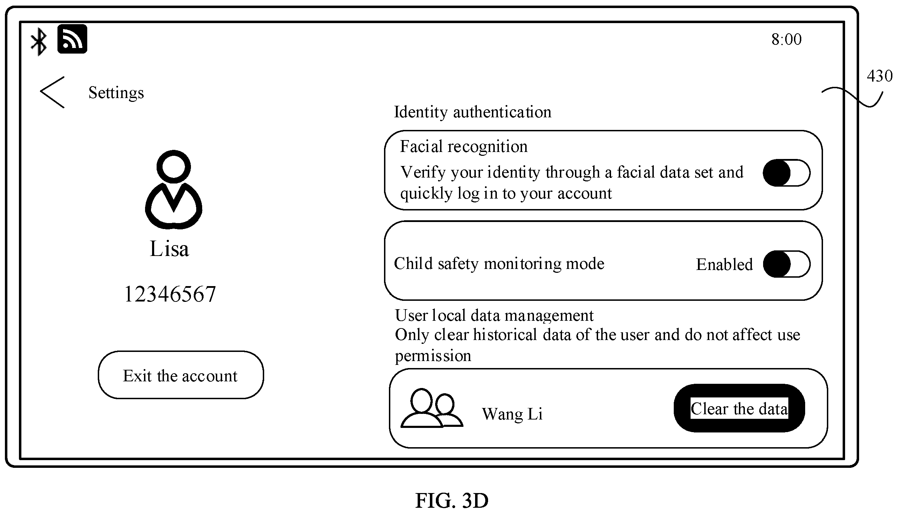

As shown in FIG. 3C, if a user needs to enable the child safety monitoring mode on the vehicle, the vehicle 100 receives an input operation (for example, a tap) performed by the user on the child safety monitoring mode enabled/disabled option, and in response to the input operation of the user, the vehicle 100 displays a user interface 430 shown in FIG. 3D.

As shown in FIG. 3D, a function of the child safety monitoring mode is enabled, and a word "enabled" is displayed. In some embodiments, the word "enabled/" may not be displayed. This is not limited in this embodiment of this application.

It should be noted that FIG. 3A to FIG. 3D merely show example schematic diagrams in which the vehicle 100 receives an operation of a user to enable the child safety monitoring mode. Alternatively, the child safety monitoring mode may be enabled by using another operation or may be displayed by using another interface. This is not limited in this embodiment of this application.

**Manner 2: The vehicle 100 automatically enables the child safety monitoring mode on the vehicle.**

When the vehicle 100 detects that a child rides in the vehicle 100, the vehicle 100 may automatically enable the child safety monitoring mode.

Optionally, after the vehicle 100 automatically enables a privacy mode, the vehicle 100 may prompt, by using prompt information, a user that the child safety monitoring mode on the vehicle 100 has been enabled. A form of the prompt information includes but is not limited to: a text prompt, a voice prompt, a vibration prompt, and the like.

**Manner 3:** A user wakes up the vehicle 100 by using a voice to enable the child safety monitoring mode.

The user may perform voice interaction with the vehicle 100 by using a voice assistant on the vehicle 100, so that the vehicle 100 enables the child safety monitoring mode.

For example, the user first needs to wake up the voice assistant on the vehicle 100. For example, the user outputs a voice "Hi Celia". The voice assistant on the vehicle 100 recognizes the voice of the user, and recognizes that the user is waking up the voice assistant. In this case, the voice assistant on the vehicle 100 may output a voice "I am here". After waking up the voice assistant on the vehicle 100, the user may control, by using a voice again, the voice assistant to perform an operation. For example, the user outputs a voice "Enable the child safety monitoring mode on the vehicle" again. The voice assistant on the vehicle 100 recognizes the voice of the user, and performs a corresponding operation. For example, the voice assistant on the vehicle 100 sends an instruction to a control center on the vehicle 100. The instruction is used by the control center to enable the child safety monitoring mode. After the child safety monitoring mode is enabled, the voice assistant on the vehicle 100 may output a voice, to notify the user that the child safety monitoring mode has been enabled. For example, the voice may be "The child safety monitoring mode on the vehicle 100 has been enabled".

**Manner 4:** A user controls, by using a mobile phone, the vehicle 100 to enable the child safety monitoring mode.

Before the user controls, by using the mobile phone, the vehicle 100 to enable the child safety monitoring mode, the mobile phone and the vehicle 100 need to log in to a same account (for example, a Huawei account), or the mobile phone and the vehicle 100 need to establish a Bluetooth connection, or the mobile phone and the vehicle 100 need to be connected to a same local area network. The mobile phone may alternatively establish a communication connection to the vehicle 100 in another manner. This is not limited in this embodiment of this application.

The user may perform an operation on the mobile phone to control the vehicle 100 to enable the child safety monitoring mode. For example, the mobile phone receives the operation of the user, and the mobile phone sends an enabling instruction to the vehicle 100 in response to the operation of the user. After the vehicle 100 receives the enabling instruction sent by the mobile phone, the vehicle 100 enables the child safety monitoring mode on the vehicle.

In addition to the foregoing four manners of enabling the child safety monitoring mode, the child safety monitoring mode on the vehicle 100 may be further enabled in another manner. This is not limited in this embodiment of this application.

**Optionally, in some embodiments, if the vehicle 100 has a shortcut key for enabling/disabling the child safety monitoring mode, after the vehicle 100 enables the child safety monitoring mode, the vehicle 100 may display guide information by using the central display screen. The guide information is used to guide a user to perform a specific operation of the shortcut key for enabling/disabling the child safety monitoring mode. The guide information includes but is not limited to any one or more of the following: a text, a picture, a video, a voice, and the like.**

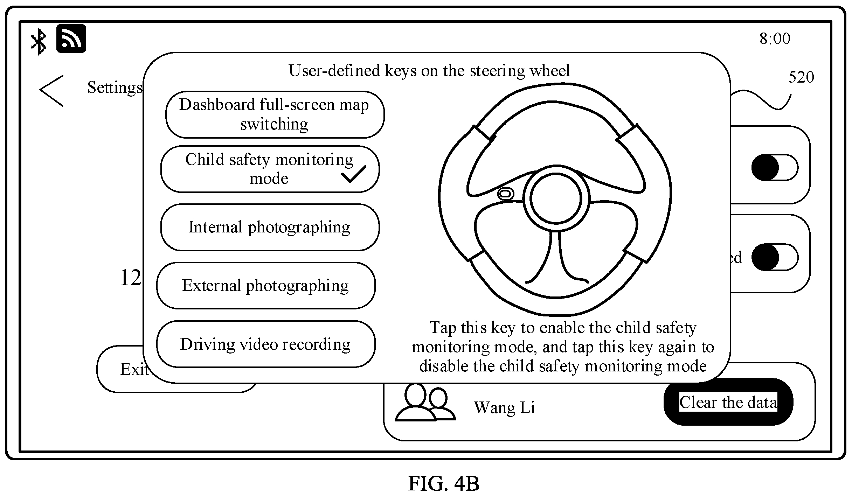

FIG. 4A and FIG. 4B show example diagrams in which the vehicle 100 displays instructions for use of a shortcut key.

As shown in FIG. 4A, after the vehicle 100 enables the child safety monitoring mode, prompt information 510 may be displayed on the central display screen of the vehicle 100. The prompt information 510 includes a control 501 and a control 502, and prompt content included in the prompt information 510 is "After the setting is completed, the child safety monitoring mode may be quickly enabled or exited by using the user-defined key on the steering wheel". The prompt information is used to prompt a user to enable/disable the shortcut key of the child safety monitoring mode. The vehicle 100 may receive an input operation (for example, a tap) performed by a user on the control 501, and in response to the input operation of the user, the vehicle 100 does not display the instructions for use of the shortcut key, or may consider that the user does not need to enable the shortcut key for enabling/disabling the child safety monitoring mode. The vehicle 100 may alternatively receive an input operation (for example, a tap) performed by a user on the control 502, and in response to the input operation of the user, the vehicle 100 may consider that the user needs to enable the shortcut key for enabling/disabling the child safety monitoring mode, and the vehicle 100 may display the instructions for use of the shortcut key.

As shown in FIG. 4A, the vehicle 100 receives an input operation (for example, a tap) performed by a user on the control 502, and in response to the input operation of the user, the vehicle 100 may display instructions 520 for use shown in FIG. 4B.

The instructions 520 for use include instructions for use of a shortcut key of one or more functions, for example, a dashboard full-screen map switching option, a child safety monitoring mode option, an internal photographing option, an external photographing option, and a driving video recording option.

As shown in FIG. 4B, the vehicle 100 receives an input operation (for example, a tap) performed by a user on the child safety monitoring mode option, and in response to the input operation of the user, the vehicle 100 may have the instructions for use of the shortcut key for enabling/disabling the child safety monitoring mode, for example, a location of the shortcut key, how to operate to enable the child safety monitoring mode, and how to operate to disable the child safety monitoring mode. As shown in FIG. 4B, the instructions for use of the shortcut key for enabling/disabling the child safety monitoring mode may be "Tap this button to enable the child safety monitoring mode, and tap this button again to disable the child safety monitoring mode".

If the child safety monitoring mode on the vehicle 100 is currently enabled, when a user taps the shortcut key on the steering wheel, the vehicle 100 disables the child safety monitoring mode. When the user taps the shortcut key on the steering wheel again, the vehicle 100 enables the child safety monitoring mode again.

It should be noted that the shortcut key for enabling/disabling the child safety monitoring mode may be located on the steering wheel, or may be at another location. A location of the shortcut key for enabling/disabling the child safety monitoring mode is not limited in this embodiment of this application.

It should be noted that the shortcut key for enabling/disabling the child safety monitoring mode may be a physical key or a virtual key; or may be in a pressing type, a rotating type, or a toggle type. Specific implementation of a type of the shortcut key for enabling/disabling the child safety monitoring mode is not limited in this embodiment of this application.

**The following describes several trigger manners in which the vehicle 100 automatically prompts a user whether to enable the child safety monitoring mode.**

**Manner 1:** When the vehicle 100 detects that a child takes a seat, and detects that the child safety monitoring mode is not enabled, the vehicle 100 may prompt the user whether to enable the child safety monitoring mode, for example, display the prompt information 440 shown in FIG. 3B.

Optionally, the vehicle 100 may prompt the user only once whether the child safety monitoring mode needs to be enabled. The vehicle 100 may alternatively prompt the user, at specific intervals, whether the child safety monitoring mode needs to be enabled.

**Manner 2:** When the vehicle 100 detects that a child takes a seat, and detects that the child safety monitoring mode is not enabled, if the user does not enable the child safety monitoring mode after the vehicle 100 gives a prompt for a plurality of consecutive times (for example, three consecutive times), the vehicle 100 may not prompt, in a specific periodicity (for example, in one week), the user whether the child safety monitoring mode needs to be enabled.

The vehicle 100 may alternatively prompt, in another manner, the user whether the child safety monitoring mode needs to be enabled. This is not limited in this embodiment of this application.

**Optionally, in some embodiments, after the vehicle 100 enables the child safety monitoring mode, the vehicle 100 may display a flag indicating that the child safety monitoring mode is enabled. This flag is used to notify a user that the child safety monitoring mode has been enabled. This avoids a case in which the user does not know whether the child safety monitoring mode is enabled or disabled when the vehicle 100 does not give any prompt. The flag indicating that the child safety monitoring mode is enabled includes but is not limited to an icon, a text, a voice prompt, and the like.**

**The vehicle 100 may display, at any one or more places on the central display screen, a HUD, and a dashboard, the flag indicating that the child safety monitoring mode is enabled.**

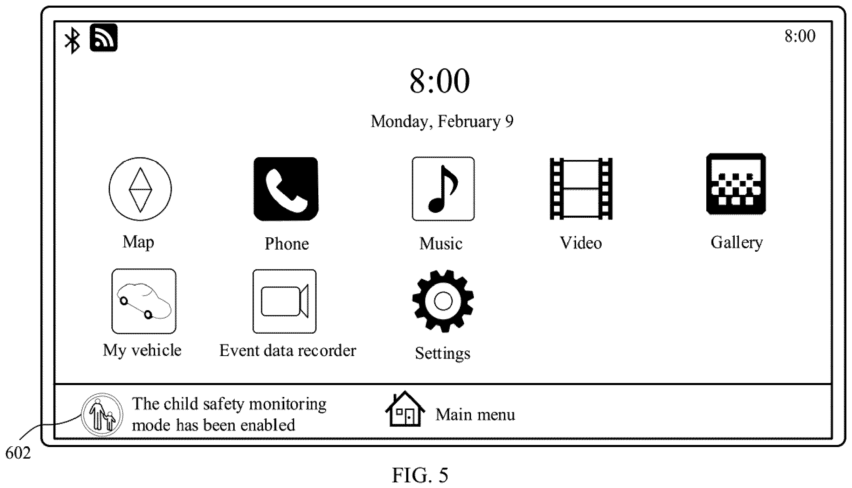

**FIG. 5** **is an example diagram in which the central display screen displays an icon of the child safety monitoring mode.**

As shown in FIG. 5, after the child safety monitoring mode on the vehicle 100 is enabled, the vehicle 100 may display, on the central display screen, an icon 602 of the child safety monitoring mode shown in FIG. 5.

Optionally, when the vehicle 100 displays, on the central display screen, the icon 602 of the child safety monitoring mode shown in FIG. 5, the vehicle 100 may also display a text shown in FIG. 5, where the text is used to inform a user that the child safety monitoring mode has been enabled. Content of the text may be "The child safety monitoring mode has been enabled".

Optionally, the vehicle 100 may display only the text on the central display screen, and does not display the icon.

The following embodiment of this application is described by using an example in which the vehicle 100 displays only a text on the central display screen and does not display an icon.

The vehicle 100 may alternatively display, in another manner, that the child safety monitoring mode on the vehicle 100 has been enabled. This is not limited in this embodiment of this application.

**The following describes, with reference to diagrams, a display form in which the vehicle 100 displays a recommended card for "child riding in a vehicle".**

**After the vehicle 100 determines a "child-sitting-down" event, the vehicle 100 may recommend, to a user, a recommended card corresponding to the "child-sitting-down" event.**

**The vehicle 100 may display, at one or more locations of the central display screen, the HUD, and the dashboard of the vehicle 100, the recommended card corresponding to the "child-sitting-down" event. The following embodiment of this application is described by using an example in which the vehicle 100 displays, on the central display screen of the vehicle 100, the recommended card corresponding to the "child-sitting-down" event.**

FIG. 6A-1 to FIG. 6B are example diagrams in which the vehicle 100 displays a recommended card corresponding to a "child-sitting-down" event.

As shown in FIG. 6A-1, after the vehicle 100 determines the "child-sitting-down" event, the vehicle 100 displays, on the central display screen, a card 601 shown in FIG. 6A-1. The card 601 is the recommended card corresponding to the "child-sitting-down" event.

The card 601 displays a text "Kids, welcome to ride in the vehicle". Optionally, the vehicle 100 may alternatively play a text "Kids, welcome to ride in the vehicle" by using a voice, to improve user experience.

The card 601 further shows recommended information, for example, children's song recommendation and animation recommendation. The vehicle 100 may receive an input operation (for example, a tap) performed by a user on a control 603, and in response to the input operation of the user, the vehicle 100 may display a children's song list, so that the user selects a song that a child likes to listen to. The vehicle 100 may alternatively receive an input operation (for example, a tap) performed by a user on a control 604, and in response to the input operation of the user, the vehicle 100 may display an animation list, so that the user selects an animation that a child likes to watch.

Optionally, the card 601 may also include a control 602. The vehicle 100 may receive an input operation (for example, a tap) performed by a user on the control 602, and in response to the input operation of the user, the vehicle 100 may stop displaying the card 601, that is, the vehicle 100 does not display the card 601. Optionally, the card 601 may not include the control 602. This is not limited in this embodiment of this application.

After the vehicle 100 displays the card 601 for specific time (for example, two minutes), the vehicle 100 may display the card 601 in a fixed area (for example, in a dock bar), and does not display the card 601 in a central area of the central display screen, to avoid affecting another operation performed by a user on the central display screen.

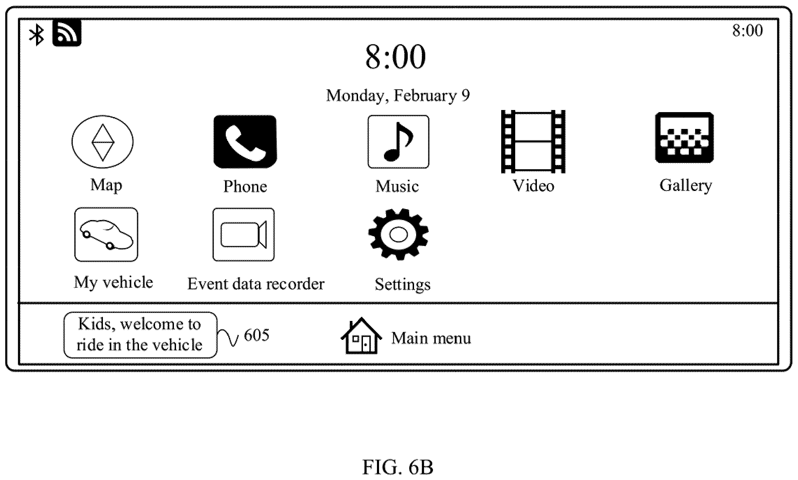

As shown in FIG. 6B, the vehicle 100 displays a card 605 in the dock bar. A display style of the card 605 may be different from a display style of the card 601.

After the vehicle 100 displays the card 605, the vehicle 100 may receive an input operation (for example, a tap) performed by a user on the card 605, and in response to the input operation of the user, the vehicle 100 may display the card 601 shown in FIG. 6A-1 herein.

FIG. 6C-1 to FIG. 6D-2 are example diagrams in which the vehicle 100 displays a **recommended card after determining a "child-left-unattended" event.**

As shown in FIG. 6C-1, after the vehicle 100 determines the "child-left-unattended" event, the vehicle 100 displays, on the central display screen, a card 606 shown in FIG. 6C-1. The card 606 is a recommended card.

The card 606 includes prompt information "Your kid is still in the vehicle, do not leave him alone in the car for too long". The prompt information is used to inform a user that a child is still in the vehicle, and pay attention to safety of the child. In addition, the prompt information may also prompt the user to take the child off the vehicle in time.

Optionally, the card 606 may also include a control 607. The vehicle 100 may receive an input operation (for example, a tap) performed by a user on the control 607, and in response to the input operation of the user, the vehicle 100 may stop displaying the card 606, that is, the vehicle 100 does not display the card 606. Optionally, the card 606 may not include the control 607. This is not limited in this embodiment of this application.

Optionally, before the vehicle 100 displays the card 606, the driver may get off the vehicle only for a short time to, for example, buy something or make a phone call. As a result, the vehicle 100 determines that the child is currently left in the vehicle 100. In this case, the vehicle 100 may display only the card 606 to remind the driver.

After the vehicle 100 displays the card 606, if the vehicle 100 detects that a preset condition is met, the vehicle 100 may stop displaying the card 606.

The preset condition may be one or more of the following: the driver returns to the vehicle 100, the vehicle door is unlocked and the vehicle door is first opened and then closed, the vehicle is powered on, and another passenger is in the vehicle 100 in addition to the child in the first seat.

After the vehicle 100 detects that the preset condition is met, that is, the vehicle 100 determines that the child is not left alone in the vehicle, or the user already knows that the child is still in the vehicle 100, the vehicle 100 may stop displaying the card 606.

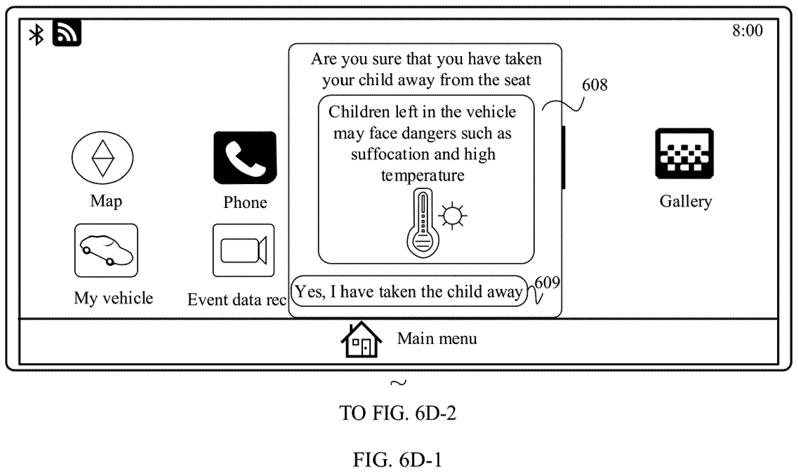

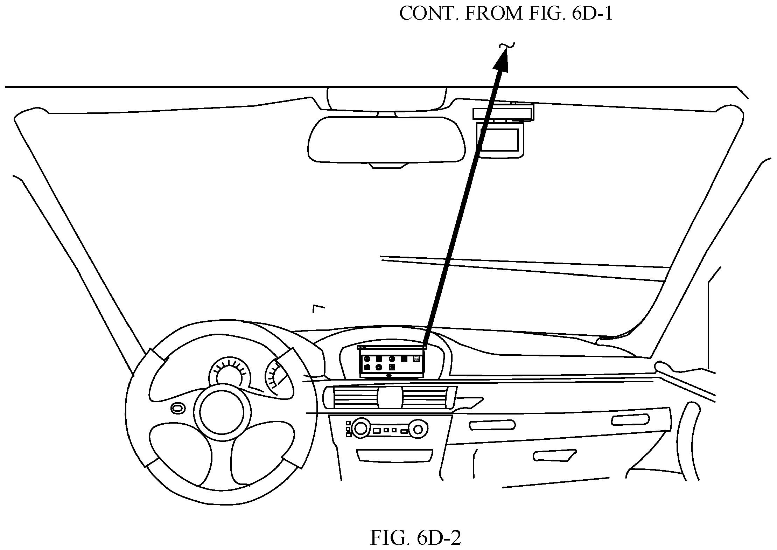

Optionally, after the vehicle 100 displays the card 606, after a period of time, if the vehicle 100 detects that the vehicle status and the information about the passenger in the vehicle meet a second condition, that is, when the vehicle 100 receives no child-leaving-seat notification, the vehicle 100 determines that the child is left in the vehicle 100 for excessively long time and may be in danger. In this case, the vehicle 100 may recommend a card 608 shown in FIG. 6D-1.

The card 608 is used to inform a user that currently the child has been left in the vehicle for excessively long time, and please determine whether the child has been taken away from the vehicle 100. The vehicle 100 may receive an input operation (for example, a tap) performed by a user on a control 609 on the card 608, and in response to the input operation of the user, that is, the user confirms that the user has known the event that the child in the vehicle, or the user has taken the child away from the vehicle 100, the vehicle 100 stops displaying the card 608.

Optionally, after the vehicle 100 displays the card 606, when the vehicle 100 receives the child-leaving-seat notification, the vehicle 100 may recommend a card 610 shown in FIG. 6E-1, that is, notify a user that the child has left the seat.

In some embodiments, before the vehicle 100 displays the recommended card 608, the vehicle 100 may trigger an alarm behavior. Alternatively, the vehicle 100 may send an alarm instruction to another device that has established a connection to the vehicle 100. For example, the vehicle 100 may send an alarm instruction to a mobile phone, so that the mobile phone triggers an alarm behavior.

In some embodiments, when the vehicle 100 displays the recommended card 608, the vehicle 100 may trigger an alarm behavior. The alarm behavior may be in a manner such as a voice playing on the vehicle 100, light blinking, or vibration of the vehicle 100. In some embodiments, the vehicle 100 may send an alarm instruction to another device that has established a connection to the vehicle 100. For example, the vehicle 100 may send an alarm instruction to a mobile phone. After receiving the alarm instruction, the mobile phone may prompt, in a manner such as a text prompt, voice playing, light blinking, or mobile phone vibration, a user that a child is left in the vehicle.

In another embodiment, after a period of time (for example, 10 seconds) after the vehicle 100 displays the recommended card 608, the vehicle 100 may trigger an alarm behavior. The alarm behavior may be in a manner such as a voice playing on the vehicle 100, light blinking, or vibration of the vehicle 100. In some embodiments, the vehicle 100 may send an alarm instruction to another device that has established a connection to the vehicle 100. For example, the vehicle 100 may send an alarm instruction to a mobile phone. After receiving the alarm instruction, the mobile phone may prompt, in a manner such as a text prompt, voice playing, light blinking, or mobile phone vibration, a user that a child is left in the vehicle.

**Optionally, in a process of riding in the vehicle, a child may leave the vehicle 100. To ensure safety of the child, the vehicle 100 may display a recommended card after the vehicle 100 detects that the child leaves a seat. The recommended card is used to inform a user that the child has left the seat, and please pay attention to safety of the child.**

As shown in FIG. 6E-1, after the vehicle 100 determines a "child-leaving-seat" event, the vehicle 100 displays, on the central display screen, a card 610 shown in FIG. 6E-1.

The card 610 includes prompt information "The child has left the seat. Please pay attention to safety of the child". The prompt information is used to inform a user that the child has left the vehicle and pay attention to safety of the child.

After the vehicle 100 displays the card 610, the vehicle 100 may receive an input operation (for example, a tap) performed by a user on a control 611 on the card 610. In response to the input operation of the user, the vehicle 100 stops displaying the card 610, that is, the vehicle 100 no longer displays the card 610.

Optionally, after the user confirms that the child has left the seat, a current child riding safety monitoring process ends, and the first electronic device may not display the card 605 in the dock bar on the central display screen, that is, the vehicle 100 stops displaying the card 605 in the dock bar on the central display screen.

FIG. 6A-1 to FIG. 6E-2 are example diagrams in which the vehicle 100 displays a **recommended card. In another embodiment, the vehicle 100 may alternatively output the recommended card by using another device. The another device includes but is not limited to a mobile phone, a smartwatch, a Bluetooth headset, and the like.**

Optionally, the vehicle 100 may display the recommended card by using another electronic device that has a binding relationship or a communication connection relationship with the vehicle 100.

If the vehicle 100 has a communication connection relationship with another electronic device, the vehicle 100 may send an instruction or information about a recommended card to the another electronic device, so that the another electronic device can display the recommended card after receiving the instruction or the information about the recommended card that is sent by the vehicle 100.

Optionally, the vehicle 100 may establish a wired connection or a wireless connection to another electronic device. A wireless communication technology includes but is not limited to a wireless local area network (wireless local area network, WLAN) technology, Bluetooth (Bluetooth), infrared, near field communication (near field communication, NFC), ZigBee, another wireless communication technology emerging in subsequent development, and the like. A mobile phone and the vehicle 100 may establish a wireless communication technology connection to each other through wireless fidelity direct (wireless fidelity direct, Wi-Fi direct) (also referred to as wireless fidelity peer-to-peer (wireless fidelity peer-to-peer, Wi-Fi P2P)), or the mobile phone and the vehicle 100 may establish a communication connection to each other by logging in to a same account (for example, a Huawei account). The mobile phone may alternatively establish a wired communication technology connection to the vehicle 100 to implement communication. For example, the mobile phone and the vehicle 100 establish a wired communication technology connection to each other by using a USB interface. A manner of establishing a communication technology connection between the mobile phone and the vehicle 100 is not limited in this embodiment of this application.

Alternatively, the vehicle 100 may display the recommended card based on a locally stored electronic device that has a binding relationship with the vehicle 100. An identifier of the vehicle 100 may be in a one-to-one binding relationship with an identifier of the electronic device. The vehicle 100 may determine, from the locally stored electronic device that has a binding relationship with the vehicle 100, another electronic device that displays the recommended card.

Alternatively, the vehicle 100 may send an instruction to a server. After receiving the instruction, the server determines, from an electronic device that is stored in the server and that has a binding relationship with the vehicle 100, another electronic device that displays the recommended card. Alternatively, the server sends, to the vehicle 100, an identifier of the electronic device that has a binding relationship with the vehicle 100.

Optionally, there are a plurality of electronic devices that have a binding relationship with the vehicle 100. The vehicle 100 may select an electronic device from the plurality of electronic devices that have a binding relationship with the vehicle 100 to display the recommended card. For example, the vehicle 100 determines an identifier of an electronic device that establishes a Bluetooth connection and/or a communication connection to the vehicle 100 in a current or previous period of time. If the plurality of electronic devices that have a binding relationship with the vehicle 100 include the identifier of the electronic device, the vehicle 100 may determine that the electronic device is an electronic device that displays the recommended card.

Alternatively, the vehicle 100 determines an identifier of an electronic device corresponding to a currently logged-in account, and the vehicle 100 determines that the electronic device is an electronic device that displays the recommended card.

Optionally, the server may select an electronic device from the plurality of electronic devices that have a binding relationship with the vehicle 100 to display the recommended card. To be specific, the vehicle 100 sends, to the server, an identifier of an electronic device that establishes a Bluetooth connection and/or a communication connection to the vehicle 100 in a current or previous period of time, or an identifier of an electronic device corresponding to a currently logged-in account. If the plurality of electronic devices that have a binding relationship with the vehicle 100 include the identifier of the electronic device, the server may determine that the electronic device is an electronic device that displays the recommended card.

After the vehicle 100 determines the electronic device that displays the recommended card, if the vehicle 100 establishes no communication connection to the electronic device, the vehicle 100 cannot communicate with the electronic device. In this case, the electronic device may send an instruction or the information about the recommended card to another electronic device by using the server, so that after receiving the instruction or the information about the recommended card that is sent by the server, the another electronic device can display the recommended card.

**FIG. 7A to FIG. 7D** **are a group of diagrams in which a recommended card is displayed on a mobile phone according to an embodiment of this application.**

FIG. 7A to FIG. 7D are example diagrams in which the card 601, the card 606, the card 608, and the card 610 are displayed on a mobile phone. For specific time when the mobile phone displays the card 601, the card 606, the card 608, and the card 610, and descriptions of the card 601, the card 606, the card 608, and the card 610, refer to the descriptions in FIG. 6A-1 to FIG. 6E-2. The vehicle 100 may send information about the card 601, information about the card 606, information about the card 608, and information about the card 610 to the mobile phone, or the vehicle 100 sends the information about the card 601, the information about the card 606, the information about the card 608, and the information about the card 610 to the mobile phone by using a server, and the mobile phone displays the card 601, the card 606, and the card 608, and the card 610 after receiving the information about the card 601, the information about the card 606, the information about the card 608, and the information about the card 610 that are sent by the vehicle 100. Details are not described herein in this embodiment of this application.

Preferably, when a "child-sitting-down" event is determined, the card 601 may be displayed by preferentially using the vehicle 100; or the card 601 may be displayed by preferentially using a second electronic device. The second electronic device is a display screen device on the first seat. In this way, after a child takes the first seat, a children's song or an animation may be played by using the card 601 displayed on the display screen device on the first seat.

Preferably, when a "child-left-unattended" event is determined, the card 606 and/or the card 608 may be displayed by preferentially using the first electronic device, to avoid a case in which the driver cannot see the card 606 and/or the card 608 when the card 606 and/or the card 608 are/is displayed on an in-vehicle infotainment after the driver gets off the vehicle.

Preferably, after a "child-leaving-seat" event is determined, the card 610 may be displayed by preferentially using the first electronic device, to avoid a case in which the driver is not in the vehicle 100, and the driver cannot see the card 610 when the card 610 is displayed on the in-vehicle infotainment.

It should be noted that, the card 601, the card 606, the card 608, and the card 610 may be displayed on both the vehicle 100 and another device, or may be displayed only on any one of the vehicle 100 or another device. This is not limited in this embodiment of this application.

**Optionally, in some embodiments, if the vehicle 100 determines a "child-leaving-seat" event or a "child-left-unattended" event, the central display screen of the vehicle 100 is in a non-screen-off state, and there is another electronic device that establishes a communication connection to the vehicle 100, the vehicle 100 may score, based on information such as a status of the vehicle 100, a device status of the another electronic device, and a user status, an attention degree of each device associated with a user; and then, display, on a device with a high user attention degree, a recommended card corresponding to** the "child-leaving-seat" event or the "child-left-unattended" event.

An attention degree of the user on the device may be obtained based on the following information: a working status of the device associated with the user, and a user status detected by the device associated with the user. The working status of the device associated with the user includes but is not limited to: whether the device associated with the user is enabled, and whether the device associated with the user is in a working state (for example, whether there is image display or audio output). The user status detected by the device associated with the user includes but is not limited to: whether the user is looking at the device or operating the device.

The vehicle 100 may score the device based on a status of the device, to obtain an attention degree score of the user on the device.

Specifically, the vehicle 100 may classify attention degree scores of the user on the device into N levels. A lower level indicates that the user has a less clear attention degree on the device and that the user has a lower attention degree on the device. A higher level indicates that the user has a more clearer attention degree on the device and that the user has a higher attention degree on the device. For example, when an attention degree score of the user on the device is at a first level, the attention degree score of the user on the device is 1/N; or when an attention degree score of the user on the device is at a second level, the attention degree score of the user on the device is 2/N.

It is assumed that N is equal to 3. In a scenario in which a child rides in a vehicle, a first-level score event includes but is not limited to: a smart headset has audio output, and an attention degree score of the first-level score event is 0.3. A second-level score event includes but is not limited to: if the central display screen of the vehicle 100 is in a screen-on state, an attention degree score of the second-level score event is 0.6. A third-level score event includes but is not limited to: if a display screen of a mobile phone is in a screen-on state, and screen-on duration of the mobile phone exceeds a specific time threshold; or if a smartwatch is in a screen-on state, and screen-on duration of the smartwatch exceeds a specific time threshold, an attention degree score of the third-level score event is 1.

It should be noted that, the vehicle 100 may alternatively determine, in another manner, an attention degree score of the user on each device. This is not limited in this embodiment of this application.

After obtaining the attention degree score of the user on each device, the vehicle 100 may display, on a device with a highest user attention degree, the recommended card corresponding to the "child-leaving-seat" service or the recommended card corresponding to the "child-left-unattended" event.

For example, if the vehicle 100 determines that a child is left in a seat or a child leaves a seat, and the vehicle 100 determines that the central display screen of the vehicle 100 is currently in a screen-on state, another electronic device (for example, a mobile phone) that establishes a connection to the vehicle 100 is in a screen-on state and has a user input, the vehicle 100 may determine that a device that the user pays more attention to is the mobile phone. In this case, the vehicle 100 may send, to the mobile phone, information about the recommended card corresponding to the "child-leaving-seat" event or information about the recommended card corresponding to the "child-left-unattended" event, so that the mobile phone can display the recommended card corresponding to the "child-leaving-seat" event or the recommended card corresponding to the "child-left-unattended" event.

**Optionally, after the vehicle 100 recommends, to a user, a recommended card corresponding to a child riding service, the vehicle 100 may update, based on a usage status of the user, a frequency at which the vehicle 100 recommends the card to the user, to improve accuracy of recommending, by the vehicle 100 to the user, the recommended card corresponding to the child riding service.**

The vehicle 100 may update, based on a quantity of times of recommending the recommended card corresponding to the child riding service and a quantity of times of using, by the user, the recommended card corresponding to the child riding service, a frequency of recommending the recommended card corresponding to the child riding service.

For example, after the vehicle 100 recommends, to the user N times, the recommended card corresponding to the child riding service, the user uses, less than M times, the recommended card corresponding to the child riding service, where M is less than N, or the user has not used the recommended card corresponding to the child riding service. In this case, the vehicle 100 can reduce the frequency of recommending, to the user, the recommended card corresponding to the child riding service.

For example, when detecting, three consecutive times, that a child riding in the vehicle, the vehicle 100 may recommend, to the user once, the recommended card corresponding to the child riding service. Alternatively, the vehicle 100 may not recommend, to the user in specific time (for example, one month), the recommended card corresponding to the child riding service.

FIG. 8 is a schematic flowchart of a riding service card recommendation method according to an embodiment of this application.

S801: A vehicle obtains vehicle status information of the vehicle and/or information about a passenger in the vehicle.

The vehicle status information may include sensor data and vehicle body status information. The sensor data includes but is not limited to infrared sensor data, microwave sensor data, pressure sensor data, or gravity sensor data. The vehicle body status information includes but is not limited to a vehicle door status, a vehicle stalling or start status, a vehicle window status, an in-vehicle audio playing status, and the like.

S802: When determining that the vehicle status information of the vehicle and/or the information about the passenger in the vehicle meet/meets a first condition, the vehicle displays a first recommended card by using a first electronic device, where the first recommended card is used to prompt a user to immediately take a child away from the vehicle.

The first recommended card is a recommended card corresponding to a "child-left-unattended" event. Herein, the first recommended card may be the card 606 shown in FIG. 7B.

In a possible implementation, the first condition includes: a driver leaves a driver's seat, and a child is in a first seat in the vehicle.

In a possible implementation, when the vehicle displays the first recommended card by using the first electronic device, the method further includes: displaying the first recommended card on the vehicle. In this way, when the first electronic device displays the first recommended card, the vehicle may also display the first recommended card. The first recommended card is a recommended card corresponding to the "child-left-unattended" event. Herein, the first recommended card may be the card 606 shown in FIG. 6C-1.

In a possible implementation, before the vehicle displays the first recommended card by using the first electronic device, the method further includes: The vehicle displays a third recommended card when determining that the vehicle status information of the vehicle and/or the information about the passenger in the vehicle meet/meets a third condition, where the third recommended card is used to inform a user that a child has taken a seat, the third recommended card includes one or more entertainment options, and the one or more entertainment options include but are not limited to a children's song playing option and an animation playing option. In this way, after detecting that a child takes a seat, the vehicle may display a recommended card for "child-sitting-down", to inform a user that the child has taken a seat.

In a possible implementation, when the vehicle displays the third recommended card, the method further includes: The vehicle displays the third recommended card by using a second electronic device.

Herein, the third recommended card may be the card 601 shown in FIG. 6A-1.

The second electronic device may be the same as or different from the first electronic device. When the second electronic device is different from the first electronic device, the second electronic device may be an electronic device near the first seat, so that the child can select, on the second electronic device, the children's song playing option or the animation playing option on the third recommended card.

In this way, when the vehicle displays the third recommended card, the second electronic device may also display the third recommended card. Herein, the third recommended card may be the card 601 shown in FIG. 7A.

The third recommended card is a recommended card corresponding to a "child-sitting-down" event.

In a possible implementation, the third condition includes: a child in the vehicle is in the first seat, and the driver is in the driver's seat.

In a possible implementation, that a child in the vehicle is in the first seat specifically includes: an infrared sensor on the vehicle continuously detects, for the first time, that there is a person in the first seat, and pressure data collected by a pressure sensor on the first seat or gravity data collected by a gravity sensor is stably maintained at a first value, where the first value is equivalent to a weight of the child. In this way, accuracy of detecting, by the vehicle, whether there is a child in the first seat can be improved.

In a possible implementation, after the vehicle displays the third recommended card, the method further includes: When determining that the vehicle status information of the vehicle and/or the information about the passenger in the vehicle meet/meets a fourth condition, the vehicle stops displaying the third recommended card, or the vehicle displays a fourth recommended card by using the first electronic device, where the fourth recommended card is used to inform a user that a child has left a seat.

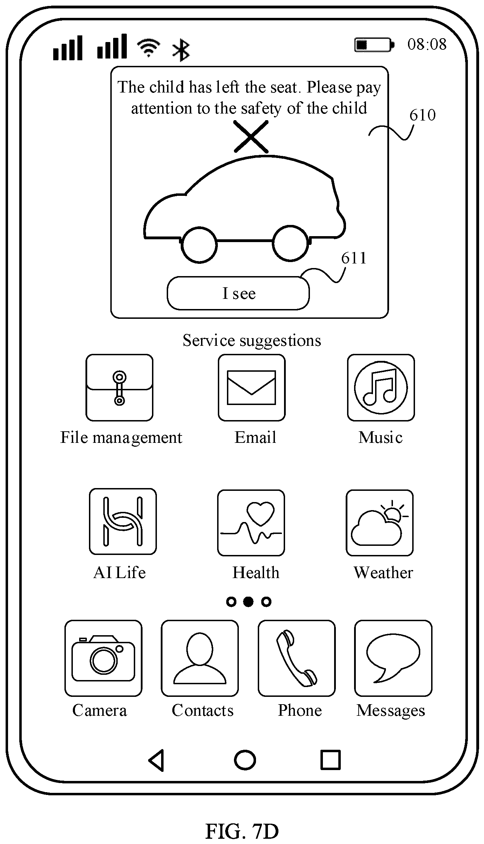

Herein, the fourth recommended card may be the card 610 shown in FIG. 7D.

The fourth recommended card is a recommended card corresponding to a "child-leaving-seat" event.

Optionally, after detecting that a child leaves a seat, the vehicle stops displaying the third recommended card, or the vehicle may display the fourth recommended card.

In a possible implementation, when the vehicle displays the fourth recommended card by using the first electronic device, the method further includes: The vehicle displays the fourth recommended card. In this way, when the first electronic device displays the fourth recommended card, the vehicle may also display the fourth recommended card. Herein, the fourth recommended card may be the card 610 shown in FIG. 6E-1.

In a possible implementation, the fourth condition includes: a child in the vehicle is not in the first seat.

In a possible implementation, a type of the first electronic device is any one of the following: a mobile phone, a smartwatch, and a Bluetooth headset.

S803: After the vehicle displays the first recommended card, when determining that the vehicle status information of the vehicle and/or the information about the passenger in the vehicle meet/meets a second condition, the vehicle displays a second recommended card by using the first electronic device, where the second recommended card is used to inform a user that a child is left in the vehicle for a long time.

Herein, the second recommended card may be the card 608 shown in FIG. 7C.

The second recommended card is a recommended card corresponding to the "child-left-unattended" event.

In a possible implementation, the second condition includes any one or more of the following: time for which a child is in the first seat exceeds first time, and a distance between the first electronic device and the vehicle exceeds a first distance threshold.

In a possible implementation, when the vehicle displays the second recommended card by using the first electronic device, the method further includes: displaying the second recommended card on the vehicle. In this way, when the first electronic device displays the second recommended card, the vehicle may also display the second recommended card.

Herein, the second recommended card may be the card 608 shown in FIG. 6D-1.

In a possible implementation, when it is determined that the vehicle status information of the vehicle and/or the information about the passenger in the vehicle meet/meets the second condition, the method further includes: The vehicle sends a first instruction to the first electronic device, where the first instruction is used to instruct the first electronic device to output first alarm information, and the first alarm information is in one or more of the following manners: vibration, light blinking, and voice broadcast.

In a possible implementation, when the vehicle establishes a communication connection to the first electronic device, the vehicle sends the first instruction to the first electronic device, where the first instruction is used to instruct the first electronic device to output the first alarm information, and the first alarm information is in one or more of the following manners: vibration, light blinking, and voice broadcast.

In another possible implementation, when the vehicle establishes no communication connection to the first electronic device, the vehicle sends the first instruction to the first electronic device by using a server, where the first instruction is used to instruct the first electronic device to output the first alarm information, and the first alarm information is in one or more of the following manners: vibration, light blinking, and voice broadcast.

Optionally, the vehicle may not need to send the first instruction to the first electronic device, and the first electronic device outputs the first alarm information when the first electronic device receives no child-leaving-seat notification sent by the vehicle.

After the vehicle detects that a child leaves a seat, the vehicle sends a seat leaving notification to the first electronic device. After receiving the seat leaving notification, the first electronic device displays or outputs the first alarm information.

In this way, when it is determined that a child is left in the vehicle for a long time, the first electronic device may output alarm information, to inform that a child is left in the vehicle for a long time.

In a possible implementation, when it is determined that the vehicle status information of the vehicle and/or the information about the passenger in the vehicle meet/meets the second condition, the method further includes: The vehicle outputs second alarm information, where the second alarm information is in one or more of the following manners: vibration, light blinking, and voice broadcast. In this way, when the first electronic device outputs the alarm information, the vehicle may also output the alarm information.

According to the riding service card recommendation method provided in this embodiment, a "child-left-unattended" event may be monitored, and different recommended cards may be displayed based on different duration for which a child is left in the vehicle, thereby preventing the child from being in danger when being left in the vehicle for a long time.

FIG. 9 is a schematic flowchart of another riding service card recommendation method according to an embodiment of this application.

S901: When a vehicle determines that vehicle status information of the vehicle and/or information about a passenger in the vehicle meet/meets a first condition, a first electronic device receives a first instruction or information about a first recommended card.

In a possible implementation, when the first electronic device establishes a communication connection to the vehicle, the first electronic device receives the first instruction or the information about the first recommended card that is sent by the vehicle.

In a possible implementation, when the first electronic device establishes no communication connection to the vehicle, the first electronic device receives the first instruction or the information about the first recommended card that is sent by a server.

In a possible implementation, the first condition includes: a driver leaves a driver's seat, and a child is in a first seat in the vehicle; or the second condition includes any one or more of the following: time for which a child is in the first seat exceeds first time, and a distance between the first electronic device and the vehicle exceeds a first distance threshold.

S902: The first electronic device displays the first recommended card in response to the first instruction or the information about the first recommended card, where the first recommended card is used to prompt a user to immediately take a child away from the vehicle.

Herein, the first recommended card may be the card 606 shown in FIG. 7B.

In a possible implementation, before the first electronic device displays the first recommended card, the method further includes: The first electronic device displays a third recommended card when the vehicle determines that the vehicle status information of the vehicle and/or the information about the passenger in the vehicle meet/meets a third condition, where the third recommended card is used to inform a user that a child has taken a seat, the third recommended card includes one or more entertainment options, and the one or more entertainment options include but are not limited to a children's song playing option and an animation playing option. In this way, after detecting that a child takes a seat, the vehicle may display, by using the first electronic device, a recommended card for "child-sitting-down", to inform a user that the child has taken a seat.

Herein, the third recommended card may be the card 601 shown in FIG. 7A.

In a possible implementation, the third condition includes: a child in the vehicle is in the first seat, and the driver is in the driver's seat.

In a possible implementation, that a child in the vehicle is in the first seat specifically includes: an infrared sensor on the vehicle continuously detects, for the first time, that there is a person in the first seat, and pressure data collected by a pressure sensor on the first seat or gravity data collected by a gravity sensor is stably maintained at a first value, where the first value is equivalent to a weight of the child. In this way, accuracy of detecting, by the vehicle, whether there is a child in the first seat can be improved.

In a possible implementation, the fourth condition includes: a child in the vehicle is not in the first seat.

In a possible implementation, a type of the first electronic device is any one of the following: a mobile phone, a smartwatch, and a Bluetooth headset.

In a possible implementation, after the first electronic device displays the third recommended card, the method further includes: When the vehicle determines that the vehicle status information of the vehicle and/or the information about the passenger in the vehicle meet/meets a fourth condition, the first electronic device stops displaying the third recommended card, or the first electronic device displays a fourth recommended card, where the fourth recommended card is used to inform a user that a child has left a seat. Optionally, after the vehicle detects that a child leaves a seat, the first electronic device stops displaying the third recommended card, or the first electronic device may not display the fourth recommended card.

Herein, the fourth recommended card may be the card 610 shown in FIG. 7D.

S903: After the first electronic device displays the first recommended card, the first electronic device receives a second instruction or information about a second recommended card when the vehicle determines that the vehicle status information of the vehicle and/or the information about the passenger in the vehicle meet/meets a second condition.

In a possible implementation, when the vehicle determines that the vehicle status information of the vehicle and/or the information about the passenger in the vehicle meet/meets the second condition, the method further includes: The first electronic device receives a third instruction, where the third instruction is used to instruct the first electronic device to output first alarm information, and the first alarm information is in one or more of the following manners: vibration, light blinking, and voice broadcast.

In a possible implementation, when the vehicle establishes a communication connection to the first electronic device, the first electronic device receives the third instruction sent by the vehicle, where the third instruction is used to instruct the first electronic device to output the first alarm information, and the first alarm information is in one or more of the following manners: vibration, light blinking, and voice broadcast.

In another possible implementation, when the vehicle establishes no communication connection to the first electronic device, the first electronic device receives, by using a server, the first instruction sent by the vehicle, where the first instruction is used to instruct the first electronic device to output the first alarm information, and the first alarm information is in one or more of the following manners: vibration, light blinking, and voice broadcast.

Optionally, the first electronic device may not need to receive the first instruction sent by the vehicle, and the first electronic device outputs the first alarm information when the first electronic device receives no child-leaving-seat notification sent by the vehicle.

After the vehicle detects that a child leaves a seat, the first electronic device may receive a seat leaving notification sent by the vehicle, and after receiving the seat leaving notification, the first electronic device displays or outputs the first alarm information.

In this way, when it is determined that a child is left in the vehicle for a long time, the first electronic device may output alarm information, to inform that a child is left in the vehicle for a long time.

S904: The first electronic device displays the second recommended card in response to the second instruction or the information about the second recommended card, where the second recommended card is used to inform a user that a child is left in the vehicle for a long time.

Herein, the second recommended card may be the card 608 shown in FIG. 7C.

According to the riding service card recommendation method provided in this embodiment, a "child-left-unattended" event may be monitored, and different recommended cards may be displayed based on different duration for which a child is left in the vehicle, thereby preventing the child from being in danger when being left in the vehicle for a long time.

An embodiment of this application further provides a vehicle. The vehicle includes one or more processors, a display screen, and one or more memories. The display screen and the one or more memories are coupled to the one or more processors. The one or more memories are configured to store computer program code, and the computer program code includes computer instructions. The one or more processors invoke the computer instructions to enable the vehicle to perform the riding service card recommendation method provided in the embodiment in FIG. 8.

An embodiment of this application further provides an electronic device, which is a first electronic device. The first electronic device includes one or more processors, a display screen, and one or more memories. The display screen and the one or more memories are coupled to the one or more processors. The one or more memories are configured to store computer program code, and the computer program code includes computer instructions. The one or more processors invoke the computer instructions to enable the first electronic device to perform the riding service card recommendation method provided in the embodiment in FIG. 9.

An embodiment of this application further provides a computer-readable storage medium. When computer instructions are run on a vehicle, the vehicle is enabled to perform the riding service card recommendation method provided in the embodiment in FIG. 8.

An embodiment of this application further provides a computer-readable storage medium. When computer instructions are run on a first electronic device, the first electronic device is enabled to perform the riding service card recommendation method provided in the embodiment in FIG. 9.

An embodiment of this application further provides a computer program product. When the computer program product is run on a vehicle, the vehicle is enabled to perform the riding service card recommendation method provided in the embodiment in FIG. 8.

An embodiment of this application further provides a computer program product. When the computer program product is run on a first electronic device, the first electronic device is enabled to perform the riding service card recommendation method provided in the embodiment in FIG. 9.

The implementations of this application may be randomly combined to implement different technical effects.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any available medium accessible by a computer, or a data storage device, such as a server or a data center, that includes one or more available media. The available medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in the foregoing embodiments may be implemented by a computer program instructing related hardware. The program may be stored in a computer-readable storage medium. When the program is executed, the procedures in the foregoing method embodiments are included. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A riding service card recommendation method, wherein the method comprises:
obtaining, by a vehicle, vehicle status information of the vehicle and/or information about a passenger in the vehicle;
when determining that the vehicle status information of the vehicle and/or the information about the passenger in the vehicle meet/meets a first condition, displaying, by the vehicle, a first recommended card by using a first electronic device, wherein the first recommended card is used to prompt a user to immediately take a child away from the vehicle; and
after the vehicle displays the first recommended card, when determining that the vehicle status information of the vehicle and/or the information about the passenger in the vehicle meet/meets a second condition, displaying, by the vehicle, a second recommended card by using the first electronic device, wherein the second recommended card is used to inform a user that a child is left in the vehicle for a long time.

2. The method according to claim 1, wherein when it is determined that the vehicle status information of the vehicle and/or the information about the passenger in the vehicle meet/meets the second condition, the method further comprises:
sending, by the vehicle, a first instruction to the first electronic device, wherein the first instruction is used to instruct the first electronic device to output first alarm information, and the first alarm information is in one or more of the following manners: vibration, light blinking, and voice broadcast.

3. The method according to claim 1 or 2, wherein when it is determined that the vehicle status information of the vehicle and/or the information about the passenger in the vehicle meet/meets the second condition, the method further comprises:
outputting, by the vehicle, second alarm information, wherein the second alarm information is in one or more of the following manners: vibration, light blinking, and voice broadcast.

4. The method according to any one of claims 1 to 3, wherein the first condition comprises: a driver leaves a driver's seat, and a child is in a first seat in the vehicle; or
the second condition comprises any one or more of the following: time for which a child is in the first seat exceeds first time, and a distance between the first electronic device and the vehicle exceeds a first distance threshold.

5. The method according to any one of claims 1 to 4, wherein when the vehicle displays the first recommended card by using the first electronic device, the method further comprises:
displaying the first recommended card on the vehicle.

6. The method according to any one of claims 1 to 5, wherein when the vehicle displays the second recommended card by using the first electronic device, the method further comprises:
displaying the second recommended card on the vehicle.

7. The method according to any one of claims 1 to 6, wherein before the displaying, by the vehicle, a first recommended card by using a first electronic device, the method further comprises:
displaying, by the vehicle, a third recommended card when determining that the vehicle status information of the vehicle and/or the information about the passenger in the vehicle meet/meets a third condition, wherein the third recommended card is used to inform a user that a child has taken a seat, the third recommended card comprises one or more entertainment options, and the one or more entertainment options comprise but are not limited to a children's song playing option and an animation playing option.

8. The method according to claim 7, wherein when the vehicle displays the third recommended card, the method further comprises:
displaying, by the vehicle, the third recommended card by using a second electronic device.

9. The method according to claim 7 or 8, wherein the third condition comprises: a child in the vehicle is in the first seat, and the driver is in the driver's seat.

10. The method according to claim 9, wherein that a child in the vehicle is in the first seat specifically comprises: an infrared sensor on the vehicle continuously detects, for the first time, that there is a person in the first seat, and pressure data collected by a pressure sensor on the first seat or gravity data collected by a gravity sensor is stably maintained at a first value, wherein the first value is equivalent to a weight of the child.

11. The method according to any one of claims 7 to 10, wherein after the displaying, by the vehicle, the third recommended card, the method further comprises:
when determining that the vehicle status information of the vehicle and/or the information about the passenger in the vehicle meet/meets a fourth condition, stopping, by the vehicle, displaying the third recommended card; or displaying, by the vehicle, a fourth recommended card by using the first electronic device, wherein the fourth recommended card is used to inform a user that a child has left a seat.

12. The method according to claim 11, wherein when the vehicle displays the fourth recommended card by using the first electronic device, the method further comprises:
displaying, by the vehicle, the fourth recommended card.

13. The method according to claim 11 or 12, wherein the fourth condition comprises: a child in the vehicle is not in the first seat.

14. The method according to any one of claims 1 to 13, wherein a type of the first electronic device is any one of the following: a mobile phone, a smartwatch, and a Bluetooth headset.

15. A riding service card recommendation method, wherein the method comprises:
receiving, by a first electronic device, a first instruction or information about a first recommended card when a vehicle determines that vehicle status information of the vehicle and/or information about a passenger in the vehicle meet/meets a first condition;
displaying, by the first electronic device, the first recommended card in response to the first instruction or the information about the first recommended card, wherein the first recommended card is used to prompt a user to immediately take a child away from the vehicle;
after the first electronic device displays the first recommended card, receiving, by the first electronic device, a second instruction or information about a second recommended card when the vehicle determines that the vehicle status information of the vehicle and/or the information about the passenger in the vehicle meet/meets a second condition; and
displaying, by the first electronic device, the second recommended card in response to the second instruction or the information about the second recommended card, wherein the second recommended card is used to inform a user that a child is left in the vehicle for a long time.

16. The method according to claim 15, wherein when the vehicle determines that the vehicle status information of the vehicle and/or the information about the passenger in the vehicle meet/meets the second condition, the method further comprises:
receiving, by the first electronic device, a third instruction, wherein the third instruction is used to instruct the first electronic device to output first alarm information, and the first alarm information is in one or more of the following manners: vibration, light blinking, and voice broadcast.

17. The method according to claim 15 or 16, wherein when the first electronic device establishes a communication connection to the vehicle, the first electronic device receives the first instruction or the information about the first recommended card that is sent by the vehicle.

18. The method according to claim 15 or 16, wherein when the first electronic device establishes no communication connection to the vehicle, the first electronic device receives the first instruction or the information about the first recommended card that is sent by a server.

19. The method according to any one of claims 15 to 18, wherein the first condition comprises: a driver leaves a driver's seat, and a child is in a first seat in the vehicle; or
the second condition comprises any one or more of the following: time for which a child is in the first seat exceeds first time, and a distance between the first electronic device and the vehicle exceeds a first distance threshold.

20. The method according to any one of claims 15 to 19, wherein before the displaying, by the first electronic device, the first recommended card, the method further comprises:
displaying, by the first electronic device, a third recommended card when the vehicle determines that the vehicle status information of the vehicle and/or the information about the passenger in the vehicle meet/meets a third condition, wherein the third recommended card is used to inform a user that a child has taken a seat, the third recommended card comprises one or more entertainment options, and the one or more entertainment options comprise but are not limited to a children's song playing option and an animation playing option.

21. The method according to claim 20, wherein the third condition comprises: a child in the vehicle is in the first seat, and the driver is in the driver's seat.

22. The method according to claim 21, wherein that a child in the vehicle is in the first seat specifically comprises: an infrared sensor on the vehicle continuously detects, for the first time, that there is a person in the first seat, and pressure data collected by a pressure sensor on the first seat or gravity data collected by a gravity sensor is stably maintained at a first value, wherein the first value is equivalent to a weight of the child.

23. The method according to any one of claims 20 to 22, wherein after the displaying, by the first electronic device, a third recommended card, the method further comprises:
when the vehicle determines that the vehicle status information of the vehicle and/or the information about the passenger in the vehicle meet/meets a fourth condition, stopping, by the first electronic device, displaying the third recommended card; or displaying, by the first electronic device, a fourth recommended card, wherein the fourth recommended card is used to inform a user that a child has left a seat.

24. The method according to claim 23, wherein the fourth condition comprises: a child in the vehicle is not in the first seat.

25. The method according to any one of claims 15 to 24, wherein a type of the first electronic device is any one of the following: a mobile phone, a smartwatch, and a Bluetooth headset.

26. A vehicle, wherein the vehicle comprises one or more processors, a display screen, and one or more memories; the display screen and the one or more memories are coupled to the one or more processors; the one or more memories are configured to store computer program code, and the computer program code comprises computer instructions; and the one or more processors invoke the computer instructions to enable the vehicle to perform the method according to any one of claims 1 to 14.

27. An electronic device, which is a first electronic device, wherein the first electronic device comprises one or more processors, a display screen, and one or more memories; the display screen and the one or more memories are coupled to the one or more processors; the one or more memories are configured to store computer program code, and the computer program code comprises computer instructions; and the one or more processors invoke the computer instructions to enable the first electronic device to perform the method according to any one of claims 15 to 25.

28. A computer-readable storage medium, configured to store computer instructions, wherein when the computer instructions are run on a vehicle, the vehicle is enabled to perform the method according to any one of claims 1 to 14.

29. A computer program product, wherein when the computer program product is run on a vehicle, the vehicle is enabled to perform the method according to any one of claims 1 to 14.
